# EUROPÄISCHE PATENTSCHRIFT

(11) **EP 1 371 940 B1**
(45) Veröffentlichungstag und Bekanntmachung des Hinweises auf die Patenterteilung: **26.10.2005**
(21) Anmeldenummer: 03011367.4
(22) Anmeldetag: 19.05.2003
(51) Int. Cl.: G01B 11/04, G01S 17/00

(54) **Verfahren zum Auffinden von Gegenständen auf einer Trägerebene**
Method to identify objects on a conveyor line
Méthode pour identifier des objets sur une ligne de convoyeur

(30) Priorität: 14.06.2002 DE 10226663
(43) Veröffentlichungstag der Anmeldung: 17.12.2003
(73) Patentinhaber: SICK AG, 79183 Waldkirch (DE)
(72) Erfinder: Nübling, Achim, 79312 Emmendingen (DE); Kaltenbach, Thomas, 79261 Gutach-Siegelau (DE)
(74) Vertreter: Manitz, Finsterwald & Partner GbR

(56) Entgegenhaltungen:
- EP-A- 0 501 639
- EP-A- 0 851 208
- EP-B- 0 374 799
- EP-B- 0 690 287
- US-A- 5 412 420

## Beschreibung

Die vorliegende Erfindung betrifft eine Verfahren zum Auffinden von Gegenständen auf einer Trägerebene auf der Basis von Daten, die die Lage von Punkten auf den Gegenständen wiedergeben, ein Verfahren zur Erfassung von Gegenständen auf einer Trägerebene und eine Vorrichtung zur Durchführung des Verfahrens.

Vielfach ist es beim automatischen Transport von Gegenständen notwendig, Gegenstände eines bestimmten Formtyps automatisch voneinander unterscheiden zu können. Dies ist insbesondere dann von Bedeutung, wenn zwei oder mehr einzelne Gegenstände sich berühren und die Gefahr besteht, dass diese Gegenstandsgruppe als ein einziger Gegenstand gewertet wird.

So ist es beispielsweise beim automatischen Transport von Paketen notwendig, auf einem Förderband liegende Pakete automatisch zu erkennen und bei der Erkennung zuverlässig voneinander zu trennen.

Darüber hinaus kann es sinnvoll sein, deren Abmessungen oder deren Volumen automatisch bestimmen zu können.

Da bei vielen Anwendungen nur Gegenstände eines bestimmten Formtyps auftreten, genügt es oft, nur Gegenstände eines bestimmten Formtyps unterscheiden zu können, d.h. die Erkennung nur innerhalb des jeweiligen Formtyps zu gewährleisten.

Von besonderer Bedeutung sind hier Formtypen, bei denen der Gegenstand eine Standfläche eines vorgegebenen Flächentyps, eine zu der Standfläche im Wesentlichen parallele Deckfläche und eine oder mehrere zu der Standfläche im Wesentlichen senkrecht verlaufende Seitenflächen aufweist. Je nach Art des Flächentyps fallen hierunter beispielsweise quaderförmige Gegenstände mit einer rechteckigen Standfläche und zylindrische Gegenstände mit einer kreisförmigen Standfläche.

Der Erfindung liegt die Aufgabe zugrunde, Verfahren bereitzustellen, mit denen auf der Basis von Daten über die Lage von Punkten auf Oberflächen von nebeneinander angeordneten Gegenständen Gegenstände eines bestimmten Formtyps aufgefunden werden können bzw. auf einer Trägerebene angeordnete Gegenstände eines bestimmten Formtyps erfasst werden können, bereitzustellen sowie eine entsprechende Vorrichtung zu schaffen. Insbesondere soll die Erfindung für Gegenstände mit einer Standfläche eines vorgegebenen Flächentyps, einer zu der Standfläche im Wesentlichen parallelen Deckfläche und einer oder mehreren zu der Standfläche im Wesentlichen orthogonal verlaufenden Seitenflächen, insbesondere quaderförmige Gegenständen, anwendbar sein.

Die Aufgabe wird gelöst durch ein Verfahren mit den Merkmalen des Anspruchs 1.

Bei dem erfindungsgemäßen Verfahren zum Auffinden von Gegenständen mit einer Standfläche eines vorgegebenen Flächentyps, einer zu der Standfläche im Wesentlichen parallelen Deckfläche und einer oder mehreren zu der Standfläche im Wesentlichen orthogonal verlaufenden Seitenflächen, insbesondere von quaderförmigen Gegenständen, auf einer Trägerebene auf der Basis von Daten, die durch eine in einer zu der Trägerebene parallelen Förderrichtung verlaufende Relativbewegung zwischen einer Abtastebene, die einen vorgegebenen Winkel mit der Trägerebene einschließt, und den Gegenständen und durch wiederholte Durchführung einer Gesamtabtastung der Lage von Punkten auf den Gegenständen innerhalb eines Erfassungsbereichs in der Abtastebene erhalten wurden und die Informationen über die Lage der erfassten Gegenstandspunkte in der Abtastebene enthalten, sowie auf der Basis von Informationen, aus denen die Relativlage von Abtastebene und Gegenständen in Förderrichtung während einer Gesamtabtastung ableitbar ist, werden wiederholt die folgenden Schritte ausgeführt: Einlesen der Daten über die Lage der Gegenstandspunkte auf den Gegenständen in der Abtastebene und Erfassung von Informationen über die Relativlage von Abtastebene und Gegenständen in Förderrichtung für eine aktuelle Gesamtabtastung, Ermittlung von Lagen und Ausdehnungen von Flanken der Gegenstände, die mit der Trägerebene im Wesentlichen einen rechten Winkel bilden, aus den Daten der aktuellen Gesamtabtastung, Ermittlung von Lagen und Längen von zu der Trägerebene im Wesentlichen parallelen Kanten der Gegenstände auf der Basis der Lagen und Ausdehnungen der Flanken sowie der Informationen über die Relativlage von Abtastebene und Gegenständen in Förderrichtung in der aktuellen Gesamtabtastung und vorhergehenden Gesamtabtastungen, und Bestimmung von Gegenständen entsprechenden Objekten aus den Lagen und Längen der zu der Trägerebene parallelen Kanten.

Die Aufgabe wird weiterhin gelöst durch ein Verfahren mit den Merkmalen des Anspruchs 13.

Bei dem erfindungsgemäßen Verfahren zur Erfassung von Gegenständen mit einer Standfläche eines vorgegebenen Flächentyps, einer zu der Standfläche im Wesentlichen parallelen Deckfläche und einer oder mehreren zu der Standfläche im Wesentlichen orthogonal verlaufenden Seitenflächen, insbesondere von quaderförmigen Gegenständen, auf einer Trägerebene, werden eine Abtastebene, die im Wesentlichen einen vorgegebenen Winkel mit der Trägerebene einschließt, und die Gegenstände in einer zu der Trägerebene parallelen Förderrichtung relativ zueinander bewegt, wobei wiederholt eine Gesamtabtastung eines Erfassungsbereichs in der Abtastebene durchgeführt wird, bei der Daten über die Lage von Gegenstandspunkten auf den Gegenständen in der Abtastebene sowie Informationen, aus denen die Relativlage von Abtastebene und Gegenständen in Förderrichtung während einer Gesamtabtastung ableitbar ist, erfasst werden, und es wird des erfindungsgemäße Auffindungsverfahren auf der Basis der gewonnenen Daten durchgeführt wird.

Die Aufgabe wird weiterhin gelöst durch eine Vorrichtung mit den Merkmalen des Anspruchs 19.

Die erfindungsgemäße Vorrichtung zur Erfassung von mit einer Standfläche eines vorgegebenen Flächentyps, einer zu der Standfläche im Wesentlichen parallelen Deckfläche und einer oder mehreren zu der Standfläche im Wesentlichen orthogonal verlaufenden Seitenflächen, insbesondere von quaderförmigen Gegenständen, auf einer Trägerebene umfasst mindestens einen Sensor für elektromagnetische Strahlung, mit dem bei wiederholten Gesamtabtastungen Daten in Bezug auf die Lage von Punkten auf den Gegenständen in einem Erfassungsbereich in einer Abtastebene des Sensors erfassbar sind, eine Einrichtung, mit der die Gegenstände und der Sensor in einer zu der Trägerebene parallelen Förderrichtung relativ zueinander bewegbar sind, wobei die Abtastebene des Sensors einen vorgegebenen Winkel mit der Trägerebene einschließt ist, und eine Datenverarbeitungseinrichtung, die zur Durchführung des erfindungsgemäßen Auffindungsverfahrens ausgebildet ist. Mit der erfindungsgemäßen Vorrichtung ist das erfindungsgemäße Erfassungsverfahren durchführbar.

Die Erfindung bezieht sich auf Gegenstände eines vorgegebenen Formtyps, dessen allgemeine Eigenschaften zur Auffindung der Gegenstände verwendet werden. Allgemein können die erfindungsgemäßen Verfahren für Gegenstände verwendet werden, die eine Standfläche eines vorgegebenen Flächentyps, eine zu der Standfläche im Wesentlichen parallele Deckfläche und eine oder mehrere zu der Standfläche im Wesentlichen orthogonal verlaufende Seitenflächen aufweisen, weswegen die Deckfläche im Wesentlichen die gleiche Form und Ausdehnung aufweisen muss wie die Standfläche, die so gewissermaßen einen Grundriss des Gegenstands darstellt.

Die Standfläche muss dabei einen vorgegebenen Flächentyp aufweisen. Dieser kann beispielsweise ein Viereck mit beliebigen Kantenlängen und Winkeln und bevorzugt auch ein Rechteck mit beliebigen Kantenlängen sein, so dass in letzterem Fall die Gegenstände Quaderform aufweisen.

Die Standfläche kann weiterhin zum Beispiel elliptisch und vorzugsweise kreisförmig sein. In letzterem Fall resultieren Gegenstände mit Zylinderform.

Die Gegenstände sind zur Durchführung des erfindungsgemäßen Erfassungsverfahrens bzw. bei der Erfassung der Daten für das erfindungsgemäße Auffindungsverfahren auf einer Trägerebene angeordnet, wobei die Standfläche mit der Trägerebene in Kontakt ist.

Zur Bereitstellung von Daten über die Lage von Punkten auf den Gegenständen werden in aufeinanderfolgenden Gesamtabtastungen eines Erfassungsbereichs in einer Abtastebene Daten über Lage von Punkten auf den Gegenständen innerhalb des Erfassungsbereichs in der Abtastebene erfasst, die Informationen über die Lage der erfassten Gegenstandspunkte in der Abtastebene enthalten, d.h. zweidimensionale Lagedaten in der Abtastebene. Unter einem Gegenstandspunkt wird hierbei ein Bereich auf dem Gegenstand verstanden, der abgetastet wurde. Dieser Bereich kann, beispielsweise bei Abtastung mit einem Laserstrahl, eine durch den Durchmesser des Laserstrahls bedingte Ausdehnung aufweisen.

Zur Erfassung dieser Daten ist bei der erfindungsgemäßen Vorrichtung ein Sensor für elektromagnetische Strahlung, insbesondere infrarotes oder sichtbares Licht, vorgesehen, mit dem entsprechende Daten von Gegenständen in einem Erfassungsbereich des Sensors erfassbar sind. Insbesondere können die erfassten Daten einen Abstand eines Gegenstandes von dem Sensor umfassen.

Um nicht nur einen einzigen Schnitt eines Gegenstands zu erfassen, werden zur Datenerfassung der Gegenstand und die Abtastebene in einer Förderrichtung parallel zu der Trägerebene relativ zueinander bewegt, so dass durch aufeinanderfolgende Gesamtabtastungen dreidimensionale Lagedaten erfassbar sind. Hierzu weist die erfindungsgemäße Vorrichtung eine entsprechende Fördereinrichtung auf.

Um tatsächlich dreidimensionale Lagedaten zu erhalten, schließt dabei die Abtastebene mit der Trägerebene einen vorgegebenen Winkel ein, der nicht Null sein darf, da sonst keine Daten über die Ausdehnung der Gegenstände in einer Richtung orthogonal zu der Trägerebene zur Verfügung stehen.

Zur Ermittlung der Lage der Abtastebene relativ zu den Gegenständen in Förderrichtung und damit parallel zur Trägerebene während einer Gesamtabtastung werden Informationen, aus denen die Relativlage von Abtastebene und Gegenständen in Förderrichtung während einer Gesamtabtastung ableitbar ist, erfasst. Hierbei kann es sich zum einen um Zeitstempel des Sensors, mit denen der Sensor die Daten einer Gesamtabtastung versieht, und um eine vorzugsweise konstante Geschwindigkeit der Relativbewegung von Abtastebene und Gegenständen handeln. Es ist jedoch auch möglich, dass beispielsweise die Fördereinrichtung Signale über den innerhalb eines bestimmten Zeitraums zurückgelegten Weg abgibt, die zur Bestimmung der Relativlage in Förderrichtung verwendet werden können. Insbesondere können hierzu Signale eines Inkrementalgebers eines den Sensor und/oder die Gegenstände bewegenden Elements, beispielsweise eines Motors verwendet werden, so dass die Verfahren auch bei ungleichförmiger Relativbewegung durchführbar sind.

Die erfassten Daten werden zur Durchführung des erfindungsgemäßen Auffindungsverfahren verwendet, das bei der erfindungsgemäßen Vorrichtung in einer Datenverarbeitungseinrichtung ausgeführt wird, die insbesondere Schnittstellen für die Datenein- und -ausgabe, einen Speicher zur Speicherung von Daten und eines Auswerteprogramms sowie einen mit den Schnittstellen und dem Speicher verbundenen bzw. kommunizierenden Prozessor umfassen kann.

Nach dem Einlesen der Daten, was jeweils nach Erfassung derselben erfolgen kann, werden aus den Daten der aktuellen Gesamtabtastung Lagen und Ausdehnungen von Flanken der Gegenstände in der aktuellen Gesamtabtastung ermittelt. Die Flanken, die mit der Trägerebene im Wesentlichen einen rechten Winkel bilden, entsprechen dabei Seitenflächen des Gegenstands. Die Lagen und Ausdehnungen der Flanken können dabei insbesondere durch die Lagen von Endpunkten der Flanken gegeben sein.

Bedingt durch die Form der Gegenstände enden die ermittelten Flanken daher auf der Trägerebene oder an der Deckfläche wenigstens eines Gegenstands. Liegen zwei Gegenstände unterschiedlicher Ausdehnung in einer zu der Trägerebene orthogonalen Richtung unmittelbar aneinander an, kann eine Flanke an der Deckfläche des flacheren Gegenstands und der Deckfläche des höheren Gegenstands enden.

Es werden nun aus den Flanken in einer Reihe von Gesamtabtastungen Kanten der Gegenstände bestimmt, die bedingt durch die Form der Gegenstände im Wesentlichen parallel zu der Trägerebene verlaufen, und vereinfacht ausgedrückt gewissermaßen Teile eines Umrisses der Gegenstände darstellen. Diese Kanten zeichnen sich bedingt durch die Form der Gegenstände unter anderem dadurch aus, dass die sie konstituierenden Endpunkte im Wesentlichen den gleichen Abstand von der Trägerebene aufweisen.

Durch Analyse der zu der Trägerebene parallelen Kanten im Hinblick auf den Flächentyp und je nach Flächentyp durch eine Zuordnung von Kanten zueinander werden dann gewissermaßen Grundrisse von den (realen) Gegenständen entsprechenden (virtuellen) Objekten bestimmt. Dabei kann zweckmäßigerweise ausgenutzt werden, dass die zu der Trägerebene parallelen Kanten bedingt durch die Form der Gegenstände die im Wesentlichen zu der Trägerebene parallele Stand- bzw. Deckfläche begrenzen. Die einem Objekt zuzuordnenden Kanten haben daher im Wesentlichen den gleichen Abstand von der Trägerebene.

Weiterhin kann der Flächentyp zur Objektfindung verwendet werden. So ist bei zylindrischen Gegenständen nach kreisförmigen Kanten zu suchen, während bei quaderförmigen Gegenständen nach Rechtecken zu suchen ist.

Mit der Erfindung können daher auch sich berührende Objekte aufgefunden werden.

Weiterhin können die Abmessungen der Objekte bestimmt werden, da deren Umriss bekannt ist und die Kanten, in denen die Flanken enden, die Deckflächen begrenzen und gleichzeitig den Abstand der Deckflächen von der Trägerebene angeben.

Nach Auffinden der Objekte können deren Lage und Abmessungen beispielsweise auf Ausgabegeräten oder an Vorrichtungen, die zur weiteren Handhabung oder Verarbeitung der Gegenstände dienen, ausgegeben werden.

Durch die Verwendung der speziellen Eigenschaften der aufzufindenden Grundkörper sind die erfindungsgemäßen Verfahren besonders einfach und schnell durchführbar. Insbesondere kann die Auffindung von Gegenständen in Echtzeit erfolgen.

Es eignet sich daher insbesondere zur Erkennung von beispielsweise quaderförmigen Gegenständen wie zum Beispiel Paketen auf Fließbändern in Verteilzentren von Logistikunternehmen.

Weiterbildungen und bevorzugte Ausführungsformen der Erfindung sind in der Beschreibung, den Ansprüchen und den Zeichnungen beschrieben.

Grundsätzlich kann die Abtastebene bis auf die oben genannte Einschränkung einen beliebigen Winkel mit der Trägerebene und auch der Förderrichtung einschließen. Zur Bestimmung der Flanken sind dann jedoch zweckmäßigerweise Transformationen der Lagekoordinaten von Punkten in der Abtastebene in solche Lagekoordinaten durchzuführen, in denen eine Bestimmung der Flanken einfach ist. Da die den Flanken zugrunde liegenden Seitenflächen im Wesentlichen orthogonal zu der Trägerebene verlaufen, sind dann entsprechende Transformationen notwendig. Es ist daher bei dem erfindungsgemäßen Auffindungsverfahren bevorzugt, dass Daten verwendet werden, die unter Verwendung einer zu der Trägerebene orthogonalen Abtastebene erhalten wurden. Besonders bevorzugt ist die Förderrichtung im Wesentlichen orthogonal zu einer Schnittlinie zwischen Trägerebene und Abtastebene ausgerichtet, da dies die Kantenerkennung vereinfacht. Bei dem erfindungsgemäßen Erfassungsverfahren bzw. der erfindungsgemäßen Vorrichtung ist es bevorzugt, dass die Abtastebene zu der Trägerebene und besonders bevorzugt auch der Förderrichtung im Wesentlichen orthogonal ausgerichtet ist. Hierdurch ist das Verfahren wesentlich einfacher und damit schneller durchführbar.

Da der Sensor die Daten in der Abtastebene nur mit einem durch den Sensor und durch Abweichungen der Gegenstände von der Idealform bedingten Fehler erfasst, können gerade im Bereich der Seitenflächen bzw. Flanken für das Auffinden der Flanken unerwünscht große Schwankungen in den Lagedaten auftreten. Es ist daher bei den erfindungsgemäßen Verfahren bevorzugt, dass vor der Bestimmung der Flanken die Daten in Bezug auf eine Richtung orthogonal zu der Trägerebene einer räumlichen Filterung unterzogen werden. Hierzu können beispielsweise ein MedianFilter oder auch eine gleitende Mittelwertbildung verwendet werden.

Um die Flanken besonders genau und gleichzeitig einfach erkennen zu können, ist es bei den erfindungsgemäßen Verfahren bevorzugt, dass zur Erkennung der Flanken jeweils Beträge von Abständen von aufeinanderfolgenden Datenpunkten in einer Richtung orthogonal zu der Trägerebene verwendet werden. Insbesondere können hierzu entsprechende Gradientenfilter verwendet werden. Beispielsweise kann eine Flanke festgestellt werden, wenn die Beträge der Abstände einen vorgegebenen Schwellwert überschreiten, dessen Wert in Abhängigkeit von der Ortsauflösung des Sensors und erwarteter minimaler und maximaler Dimensionen der Gegenstände in der Richtung orthogonal zu der Trägerebene gewählt sein. Die Datenpunkte werden dabei in einer Reihenfolge erfasst, die einer fortschreitenden Abtastung in der Abtastebene quer zur Trägerebene entspricht.

Die Genauigkeit der Ermittlung der Lage von zu der Trägerebene parallelen Kanten kann insbesondere von der Genauigkeit der Bestimmung der Lage der Endpunkte einer Flanke abhängen. Es ist daher bevorzugt, dass Lagen von Endpunkten der Flanken jeweils in einer Richtung parallel zu einer Schnittgeraden von Trägerebene und Abtastebene durch Mittelung entsprechender Daten von der Flanke zugeordneten Datenpunkten erhalten werden. Durch die Mittelung mehrerer Datenpunkte werden Schwankungsfehler weitgehend ausgeglichen.

Weiterhin ist es zu dem gleichen Zweck bevorzugt, dass einem Endpunkt einer Flanke ein Abstand von der Trägerebene oder ein Wert einer Koordinate in einer Richtung orthogonal zu der Trägerebene zugeordnet wird, der durch Mittelung entsprechender Daten von Datenpunkten einer sich an die Flanke an dem Endpunkt anschließenden, zu der Flanke im Wesentlichen orthogonale Fläche eines erfassten Gegenstands erhalten werden.

Bedingt durch die Form der Gegenstände schließt sich an einen Endpunkt einer Flanke immer eine zu der Trägerebene parallele Fläche eines Gegenstands an. Um diese Information bei der Objektbildung verwenden zu können, ist es bevorzugt, dass einem Endpunkt einer Flanke eine Richtung zugeordnet wird, die angibt, in welcher Richtung sich eine sich an die Flanke anschließende, zu dieser im Wesentlichen orthogonale Fläche eines erfassten Gegenstands erstreckt. Zu der Trägerebene parallele Kanten von quaderförmigen Gegenständen lassen sich so sehr leicht auffinden, da diese durch Endpunkte von Flanken gebildet werden, denen die gleiche Richtung zugeordnet ist.

Zur Bestimmung der zu der Trägerebene parallelen Kanten müssen die Lagen der Endpunkte der Flanken in Förderrichtung bekannt sein. Zur schnellen und einfachen Bestimmung der Lage der Endpunkte ist es bevorzugt, dass die Lage von Endpunkten der Flanken einer Gesamtabtastung in der Förderrichtung der Gegenstände auf der Basis der Bewegungsgeschwindigkeit zwischen der Abtastebene und den Gegenständen und dem zeitlichen Abstand der Gesamtabtastung von der aktuellen Gesamtabtastung bestimmt wird.

Zur schnellen Bestimmung der zu der Trägerebene parallelen Kanten ist es bevorzugt, dass die Lagen von Endpunkten der Flanken und die den Endpunkten zugeordneten Richtungen verwendet werden. Die Zuordnung von Endpunkten zu Kanten wird so erheblich vereinfacht.

Bei den erfindungsgemäßen Verfahren ist es bevorzugt, dass sie zur Auffindung von quaderförmigen Gegenständen verwendet werden, und dass ein neues Objekt nur dann erzeugt wird, wenn zwei zu der Trägerebene im Wesentlichen parallele Kanten aufgefunden werden, die in etwa den gleichen Abstand von der Trägerebene aufweisen und einen Winkel einschließen, dessen Betrag kleiner als ein vorgegebener Grenzwinkel ist. Dies bedeutet, dass nach im Wesentlichen zueinander parallelen, zu der Trägerebene parallelen Kanten gesucht wird, die einen Quader begrenzen. Dieses Verfahren ist besonders einfach und genau durchführbar. Zur Beschleunigung der Suche können weitere Kriterien herangezogen werden.

Weiterhin ist es bevorzugt, dass die erfindungsgemäßen Verfahren zur Auffindung von quaderförmigen Gegenständen verwendet werden, und dass ein neues Objekt nur dann erzeugt wird, wenn den Endpunkten, die der einen zu der Trägerebene parallelen Kante zugrunde liegen, eine andere Richtung zugeordnet ist, als den Endpunkten, die der anderen zu der Trägerebene parallelen Kante zugrunde liegen. Dieses sehr einfache, aber effektive Kriterium zur Objektfindung nutzt wiederum die Form der Gegenstände aus, da zwei sich gegenüberliegende Seitenflächen eines Quaders auf jeweils gegenüberliegenden Seiten in die Deckfläche übergehen.

Die erfindungsgemäßen Verfahren stellen einfach die Lagen der zu der Trägerebene parallelen Kanten sowohl in der Trägerebene, und damit eine Grundfläche des Gegenstands, als auch in einer Richtung orthogonal zu der Trägerebene bereit. Es ist daher bevorzugt, dass das Volumen wenigstens eines Objekts auf der Basis einer Grundfläche, die durch zu der Trägerebene parallele Kanten des Objekts gegeben ist, und des Abstandes der zu der Trägerebene parallelen Kanten von der Trägerebene berechnet wird. Das Volumen des Objekts entspricht dann in guter Näherung dem Volumen des entsprechenden Gegenstands. Ein solches Verfahren ermöglicht also nicht nur die Erfassung bzw. Auffindung von Gegenständen, sondern erlaubt gleichzeitig die Bestimmung von deren Volumen. Es eignet sich daher insbesondere zum Einsatz im Transport- und Logistikgewerbe.

Es ist bevorzugt, dass die Daten über die Lage von Gegenstandspunkten mittels einer Lasermesseinrichtung erfasst werden, die einen flächigen Erfassungsbereich aufweist. Solche Einrichtungen arbeiten mit hoher Genauigkeit berührungsfrei und sind zudem wartungsfreundlich.

Besonders bevorzugt wird eine Lasermesseinrichtung verwendet, die wenigstens einen Laserscanner, vorzugsweise einen Radialscanner, umfasst. Solche Laserscanner erlauben eine schnelle und genaue Erfassung der Lagen von Oberflächenbereichen auf Gegenständen. Als Laserscanner können beispielsweise über der Trägerebene angeordnete Zeilenscanner mit relativ zum Zeilenscanner ortsfesten Abtaststrahlungsbündeln oder Laserscanner mit bewegten Abtaststrahlungsbündeln verwendet werden. Dabei weisen insbesondere Radialscanner einen großen kreissektorförmigen Erfassungsbereich auf.

Um eine Verdeckung eines Gegenstands durch einen anderen zu vermeiden, ist es bevorzugt, dass wenigstens zwei, in Förderrichtung der Gegenstände und oberhalb der Trägerebene angeordnete Laserscanner, insbesondere Radialscanner, verwendet werden, deren Erfassungsbereiche sich überlappen. Bei der erfindungsgemäßen Vorrichtung ist es dazu bevorzugt, dass zwei Laserscanner vorgesehen sind, deren Abtastebenen in einem vorgegebenen Winkel zu der Trägerebene geneigt sind und die in einem vorgegebenen Abstand von dieser entfernt und zu beiden Seiten einer möglichen Bewegungsbahn der Gegenstände angeordnet sind. Besonders bevorzugt sind deren Abtastebenen auch orthogonal zu der Förderrichtung ausgerichtet.

Bei den erfindungsgemäßen Verfahren kann grundsätzlich die Abtastebene, d.h. der Sensor der erfindungsgemäßen Vorrichtung, bewegt werden. Durch die für den Sensor erforderlichen, dann bewegbaren Anschlüsse wird dann jedoch eine Vorrichtung zur Durchführung des erfindungsgemäßen Erfassungsverfahrens aufwendig und anfällig. Es ist daher bevorzugt, dass bei dem erfindungsgemäßen Erfassungsverfahren bei ortsfest angeordneter Abtastebene die Gegenstände bewegt werden. Bei der erfindungsgemäßen Vorrichtung ist es bevorzugt, dass die Einrichtung zur Relativbewegung eine Fördereinrichtung für die Gegenstände ist. Durch die feste Montage des Sensors wird insbesondere auch dessen Justierung vereinfacht bzw. eine Dejustierung vermieden.

Weiterer Gegenstand der Erfindung ist eine Computerprogramm mit Programmcode-Mitteln, um das erfindungsgemäße Auffindungsverfahren durchzuführen, wenn das Programm auf einem Computer ausgeführt wird.

Schließlich ist Gegenstand der Erfindung ein Computerprogrammprodukt mit Programmcode-Mitteln, die auf einem computerlesbaren Datenträger gespeichert sind, um das erfindungsgemäße Auffindungsverfahren durchzuführen, wenn das Computerprogrammprodukt auf einem Computer, d.h. einer Datenverarbeitungsanlage, ausgeführt wird.

Die Erfindung wird nun weiter beispielhaft anhand der Zeichnungen erläutert. Es zeigen:
- Fig. 1: eine schematische perspektivische Ansicht eines Förderbands mit Gegenständen und einer Vorrichtung zur Erfassung der Gegenstände,
- Fig. 2: ein Ablaufdiagramm, in dem die Hauptschritte eines von der Vorrichtung in Fig. 1 verwendeten Verfahrens veranschaulicht sind,
- Fig. 3a,b: zwei schematische Diagramme, in denen die Lage von von jeweils einem der Laserscanner in Fig. 1 erfassten Gegenstandspunkten in einer Y-Z-Ebene veranschaulicht sind,
- Fig. 4: ein schematisches Diagramm, in dem die Daten in Fig. 3a, b nach einer Zusammenführung veranschaulicht sind,
- Fig. 5: ein schematisches Diagramm, in dem die Daten aus Fig. 4 nach einer Filterung gezeigt sind,
- Fig. 6: ein schematisches Diagramm, in dem den Datenpunkten in Fig. 5 zugeordnete Höhendifferenzen als Funktion der y-Koordinate der Datenpunkte aufgetragen sind,
- Fig. 7: das schematisches Diagramm der Fig. 5, in dem die vorläufigen Lagen von Flanken definierenden Datenpunkten eingezeichnet sind,
- Fig. 8: das schematische Diagramm der Fig. 5, in dem Suchbereiche zur Berechnung von Endpunkten einer Flanke eingezeichnet sind,
- Fig. 9: ein schematisches Diagramm, in dem Projektionen von Endpunkten von gefundenen Flanken in die X-Y-Ebene dargestellt sind,
- Fig. 10: das schematische Diagramm der Fig. 9 nach Ersetzung der Projektionen der Endpunkte durch horizontale Kanten, und
- Fig. 11: das schematische Diagramm der Fig. 10 nach Konstruktion von Objekten.

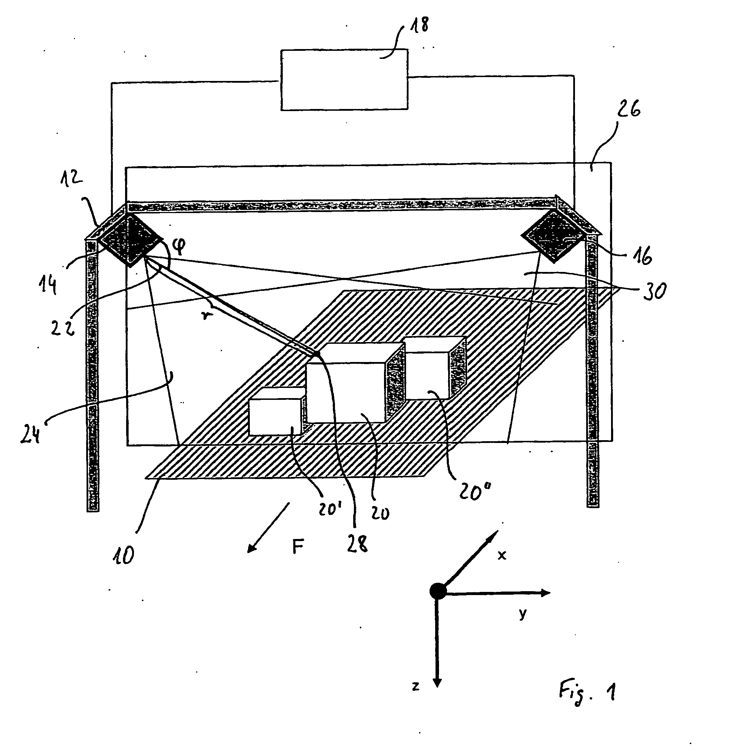

In Fig. 1 ist ein Förderband 10 im Erfassungsbereich von zwei, rechts und links oberhalb des Förderbandes 10 an einer Brücke 12 positionierten Laserscannern 14 und 16 angeordnet. Die Laserscanner 14 und 16 sind mit einer Auswerteeinrichtung 18 verbunden.

Das Förderband 10 bildet im Bereich der Laserscanner 14 und 16 eine Trägerebene und wird zum Transport von Gegenständen 20, 20', 20" in einer Förderrichtung F von einer in Fig. 1 nicht gezeigten Antriebseinrichtung mit konstanter Geschwindigkeit angetrieben.

In einem mit dem Förderband 10 mitbewegten kartesischen Koordinatensystem mit den Achsen X, Y und Z ist die Trägerebene parallel zu der X-Y-Ebene des Koordinatensystems angeordnet. Die Förderrichtung F ist parallel zur X-Achse ausgerichtet, aber in entgegengesetzter Richtung orientiert.

Bei den Laserscarinern 14 und 16 handelt es sich jeweils um konventionelle Radialscanner, deren Funktion kurz am Beispiel des Laserscanners 14 beschrieben wird.

Bei dem Laserscanner 14 wird, wie in Fig. 1 gezeigt, ein Strahlungsbündel 22 eines Lasers mit konstanter Winkelgeschwindigkeit in einem ebenen Erfassungsbereich 24 in einer Abtastebene 26 geschwenkt, so dass der Erfassungsbereich 24 mit einer konstanten Abtastfrequenz überstrichen wird. Synchron hierzu wird ein Empfänger für reflektierte Strahlung des Lasers mitgeschwenkt, mittels dessen Strahlung des bei einem gegebenen Winkel ϕ ausgesendeten und an einem Bereich 28 des Gegenstands 20 reflektierten Strahlungsbündels 22 bei diesem Winkel erfassbar ist. Die Erfassung von reflektiertem Licht erfolgt in konstanten zeitlichen Abständen, so dass Daten in konstanten Winkelabständen aufgenommen werden.

Auf diese Weise sind Daten über die Lage von in dem Erfassungsbereich 24 liegenden Gegenständen 20 in der Abtastebene 26 erfassbar. Wird bei einem gegebenen Drehwinkel ϕ das von dem Laserscanner 14 ausgesendete Strahlungsbündel 22 von dem Punkt bzw. Bereich 28 des Gegenstands 20 reflektiert und von dem Empfänger des Laserscanners 14 empfangen, wird aus der Laufzeit des Strahlungsbündels 22 zwischen dem Laserscanner 14, dem Bereich 28 des Gegenstands 20 und wieder dem Laserscanner 14 eine Entfernung r des Bereichs bzw. Punktes 28 von dem Laserscanner 14 bei dem gegebenen Drehwinkel ϕ ermittelt.

Der Laserscanner 14 gibt als Daten für jeden Winkel ϕ einen Abstand r aus, bei dem ein Gegenstandspunkt 28 erfasst wurde. Liegt ein Gegenstandspunkt in radialer Richtung außerhalb des Erfassungsbereichs oder wurde kein Gegenstandspunkt gefunden, wird ein entsprechender Entfernungswert mit einem vorgegebenen sehr großen Wert ausgegeben.

Die Erfassungsbereiche 24 und 32 der Laserscanner 14 bzw. 16 sind senkrecht zu der Förderrichtung F und damit parallel zueinander ausgerichtet. Weiterhin überlappen sich die Erfassungsbereiche 24 und 32, so dass Gegenstandspunkte in dem Überlappungsbereich der Erfassungsbereiche der Laserscanner 14 und 16 von beiden Laserscannern 14 und 16 erfassbar sind.

Um die Daten der Laserscanner 14 und 16 in vorteilhafter Weise zu einer Gesamtabtastung zusammenfassen zu können, arbeiten die Laserscanner 14 und 16 mit gleicher Abtastfrequenz und einer Phasenverschiebung von 180°.

Die Auswerteeinrichtung 18 weist, in Fig. 1 nicht gezeigt, Schnittstellen zur Eingabe von Daten von den Laserscannern 14 und 16, eine Speichereinrichtung zur Speicherung von Daten und eines Auswerteprogramms, eine Ausgabeschnittstelle und einen mit den Eingabeschnittstellen, der Speichereinrichtung und der Ausgabeschnittstelle verbundenen Prozessor auf.

Zum Auffinden von Gegenständen auf dem Förderband 10 wird das folgende Verfahren zyklisch mit der Abtastfrequenz durchgeführt, wobei die folgenden Abläufe jeweils in einem Zyklus erfolgen:

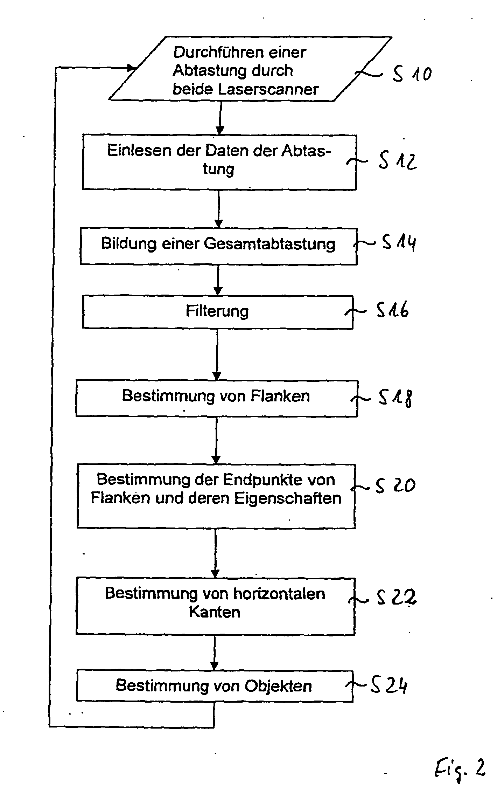

Von den Laserscannern 14 und 16 werden in einem Schritt S10 (vgl. Fig. 2) jeweils entsprechend der Abtastfrequenz aufeinanderfolgende Einzelabtastungen durchgeführt. Da die Abtastungen des Laserscanners 14 um eine halbe Abtastperiode T/2 gegenüber denen des Laserscanners 16 versetzt sind, werden Abtastungen i zu Zeiten tᵢ⁽¹⁴⁾ des Laserscanners 14 mit Datenpunkten (rⱼ⁽¹⁴⁾, ϕⱼ⁽¹⁴⁾ᵢ mit j=1, N, und Abtastungen des Laserscanners 16 zu Zeiten tᵢ⁽¹⁶⁾= tᵢ⁽¹⁴⁾+T/2 mit Datenpunkten (rⱼ⁽¹⁶⁾, ϕⱼ⁽¹⁶⁾)ᵢ erfasst, wobei N die Anzahl der Drehwinkelpositionen bei einer Abtastung i des Erfassungsbereichs 24 bzw. 30 durch den Laserscanner 14 bzw. 16 und i jeweils eine natürliche Zahl ist und rⱼ⁽¹⁴⁾ bzw. rⱼ(¹⁶) die Abstände eines erfassten Gegenstandspunkts von dem Laserscanner 14 bzw. 16 bezeichnen, die bei den Erfassungswinkeln ϕⱼ⁽¹⁴⁾ bzw. ϕⱼ⁽¹⁶⁾ gegenüber der Z-Achse erfasst wurden.

Obwohl die einzelnen Datenpunkte einer Abtastung nacheinander erfasst werden, kann wegen der verglichen mit der Abtastfrequenz geringen Geschwindigkeit des Förderbandes 10 allen Datenpunkten einer Abtastung in sehr guter Näherung die gleiche Erfassungszeit zugeordnet werden. Diese ergibt sich aus einem von den Laserscannern 14 bzw. 16 mit den Datenpunkten ausgegebenen Zeitstempel. Auf der Basis dieser Zeitstempel und der Fördergeschwindigkeit sind damit auch die x-Koordinaten der Abtastebene 26 wie auch der bei der aktuellen Abtastung in der Abtastebene 26 erfassten Gegenstandspunkte in dem mitbewegten Koordinatensystem gegeben.

Das eigentliche Auswerteverfahren, das mittels des Prozessors in der Auswerteeinrichtung 18 durchgeführt wird, umfasst folgende Abläufe:

Nach Einlesen der Datenpunkte sowie der Zeitstempel von den Laserscannern 14 und 16 in die Auswerteeinheit 18 in Schritt S12 werden die Datenpunkte der beiden Abtastungen in Schritt S14 zu einer Gesamtabtastung zusammengeführt.

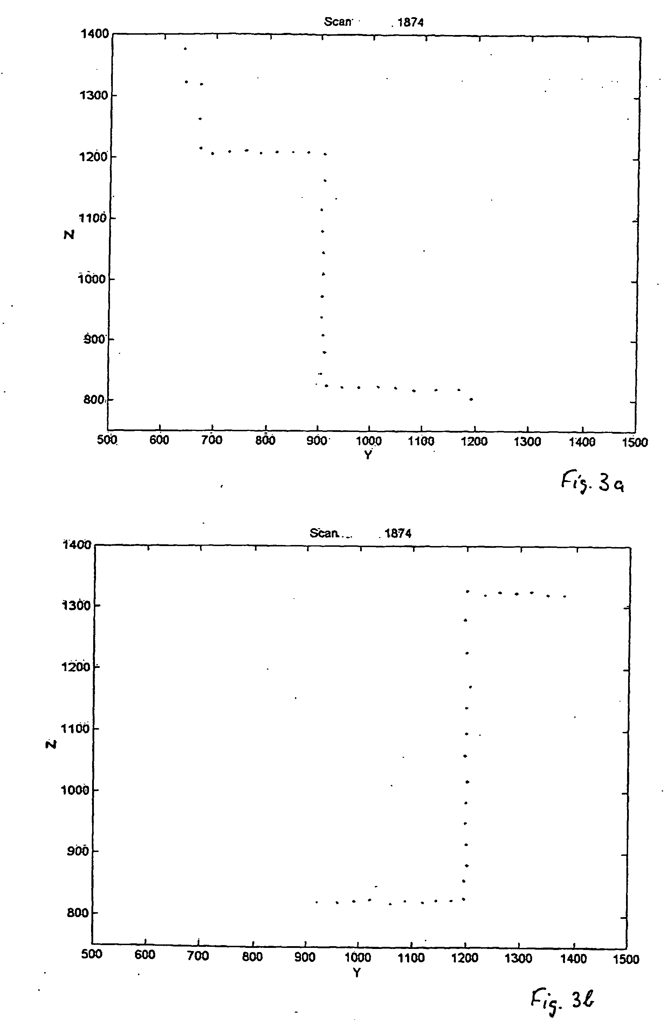

Dazu werden die Datenpunkte einer Abtastung i mittels bekannter Beziehungen in die entsprechenden kartesischen Koordinaten (yⱼ⁽¹⁴⁾, zⱼ⁽¹⁴⁾)ᵢ bzw. (yⱼ⁽¹⁶⁾, zⱼ⁽¹⁶⁾)ᵢ in dem mit dem Förderband 10 mitbewegten Koordinatensystem umgerechnet. Es ergibt sich dabei eine Höhenkontur z als Funktion der Lage y entlang der Y-Achse. Solche Höhenkonturen sind beispielhaft in den Fig. 3a und 3b für Daten der Laserscanner 14 bzw. 16 gezeigt, wobei der Ursprung des Koordinatensystems an einem beliebigen, aber festen Punkt gewählt wurde. Dabei ist zu beachten, dass in diesen Darstellungen wie auch entsprechenden späteren Darstellungen die Lage des Förderbandes in der Darstellung oben wäre, da die Z-Achse in Fig. 1 nach unten weist. Weiterhin sind in diesen Darstellungen auf den Achsen Skalierungen in vorgegebenen, aber beliebigen Einheiten eingezeichnet. Da es zur Erläuterung des Verfahrens auf die Größe der Zahlen nicht ankommt, sind die Einheiten nicht ausdrücklich angegeben.

Weiterhin wird für jeden Datenpunkt eine x-Koordinate berechnet, die sich aus der Zeit tᵢ⁽¹⁴⁾ bzw. tᵢ⁽¹⁶⁾ bzw. den entsprechenden Zeitstempeln der Abtastung multipliziert mit der Fördergeschwindigkeit des Förderbandes 10 ergibt und die Position der Abtastebene bzw. Erfassungsebene zum Zeitpunkt der Erfassung angibt.

Um eine höhere Auflösung zu erzielen, wird dann eine Gesamtabtastung gebildet, indem eine frühere Abtastung i des Laserscanners 14 zur Zeit tᵢ⁽¹⁴⁾ mit einer späteren Abtastung i des Laserscanner 16 zur Zeit tᵢ⁽¹⁶⁾= tᵢ⁽¹⁴⁾+T/2 zusammengeführt wird.

Die Gesamtabtastung wird sukzessive ausgehend von der Reihe der Datenpunkte der früheren Abtastung des Laserscanners 14 in ihrer ursprünglichen Reihenfolge aufgebaut. Zu Anfang besteht die Gesamtabtastung also nur aus der Reihe der früher erfassten Datenpunkte in ihrer ursprünglichen Reihenfolge.

Beginnend mit dem ersten Datenpunkt der späteren Abtastung des Laserscanners 16 wird dann in der Reihenfolge der Datenpunkte in der früheren Abtastung jeweils ein Datenpunkt der späteren Abtastung in die aktuelle Gesamtabtastung an einer Position eingefügt, an der der vorhergehende Datenpunkt der aktuellen Gesamtabtastung eine kleinere y-Koordinate und der nachfolgende Datenpunkt, soweit vorhanden, eine größere y-Koordinate hat als der einzufügende Datenpunkt. Es entsteht durch das Einfügen eine neue aktuelle Gesamtabtastung mit der der Einfügeprozeß fortgesetzt wird, bis alle Datenpunkte der späteren Abtastung eingefügt sind.

Die Gesamtabtastung hat nun Datenpunkte (xⱼ, yⱼ, zⱼ) für j=1, 2N und weist nun, wie in Fig. 4 gezeigt, keine Verdeckungen mehr auf, die in den Einzelabtastungen (vgl. Fig. 3a und 3b) noch vorhanden waren.

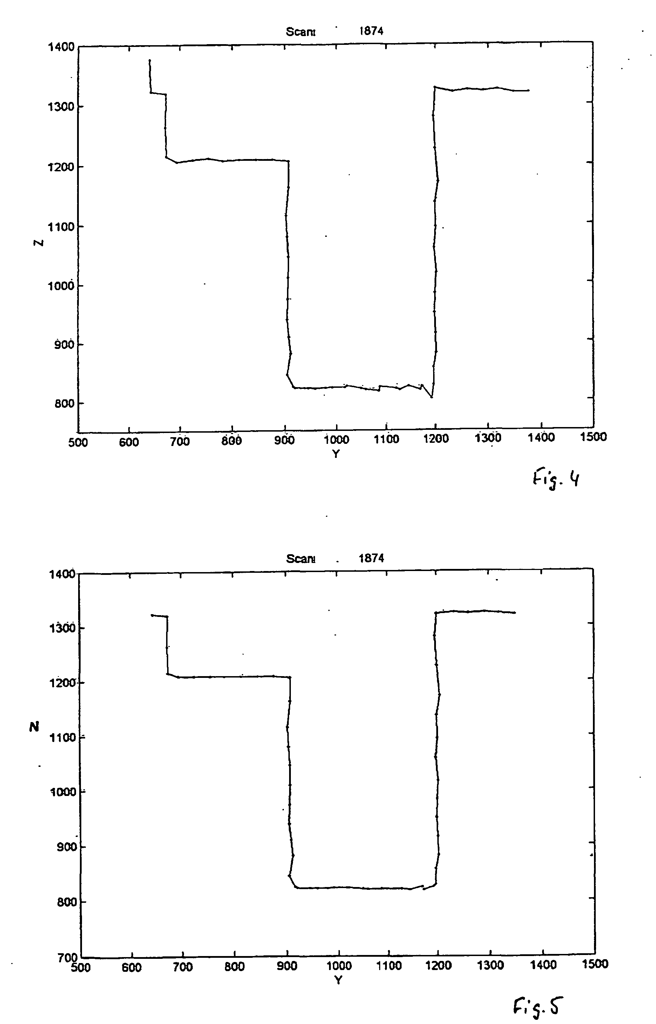

In einem folgenden Schritt S16 werden die z-Koordinaten der Datenpunkte der Gesamtabtastung dann einer Filterung mit einem Medianfilter unterworfen, bei dem jeweils drei aufeinanderfolgende Werte betrachtet werden. Eine z-Koordinate eines mittleren von drei in der Reihe der Datenpunkte der Gesamtabtastung aufeinanderfolgenden Datenpunkten wird dabei durch die z-Koordinate der drei Datenpunkte ersetzt, die weder die kleinste noch die größte der drei z-Koordinaten ist. Das Ergebnis der Filterung ist beispielhaft in Fig. 5 gezeigt. Die durchgezogene Linie verbindet die gefilterten Datenpunkte, während die einzelnen Punkte die ungefilterten Datenpunkte zeigen.

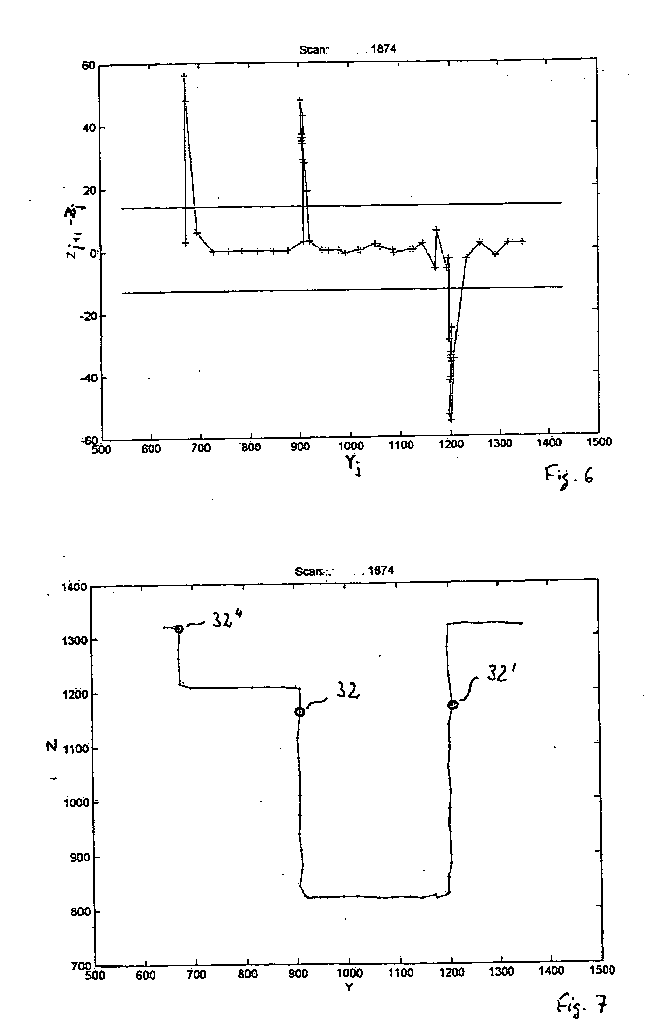

In einem nächsten Schritt S 18 wird die Lage von Flanken, die im Wesentlichen senkrecht zu der Trägerebene sind, d.h. mit der Z-Achse einen Winkel innerhalb eines vorgegebenen kleinen Winkelbereichs einschließen, in der aktuellen Gesamtabtastung bestimmt. Hierzu werden im Folgenden als Höhendifferenzen bezeichnete Differenzen der z-Koordinaten aufeinanderfolgender gefilterter Datenpunkte der Gesamtabtastung berechnet und den Datenpunkten zugeordnet. In Fig. 6 sind für die Beispieldaten in Fig. 5 die Differenzen der z-Koordinaten zⱼ₊₁-zⱼ aufeinanderfolgender gefilterter Datenpunkte j= 1, 2N-1 über den entsprechenden y-Koordinaten yⱼ₊₁ aufgetragen.

Überschreitet der Betrag der Höhendifferenzen einen vorgegebenen, in Fig. 6 durch waagerechte Geraden angedeuteten Schwellwert, der mit abnehmender Breite des Winkelbereichs zunimmt, so wird eine Flanke bei der entsprechenden y-Koordinate bzw. dem entsprechenden Datenpunkt festgestellt, der nun als der die Lage der Flanke definierende Datenpunkt angesehen wird. Der Schwellwert wird dabei experimentell durch Optimierungsversuche bestimmt.

Wie in Fig. 6 gezeigt, können dabei auch mehrere aufeinanderfolgende Beträge der Höhendifferenzen den Schwellwert überschreiten. Die vorläufige Lage der Flanke wird dann durch den Datenpunkt definiert, dessen Höhendifferenz den Schwellwert am weitesten überschreitet.

Die definierenden Datenpunkte 32, 32' und 32" für die Daten aus Fig. 5 sind in Fig. 7 durch Kreise veranschaulicht

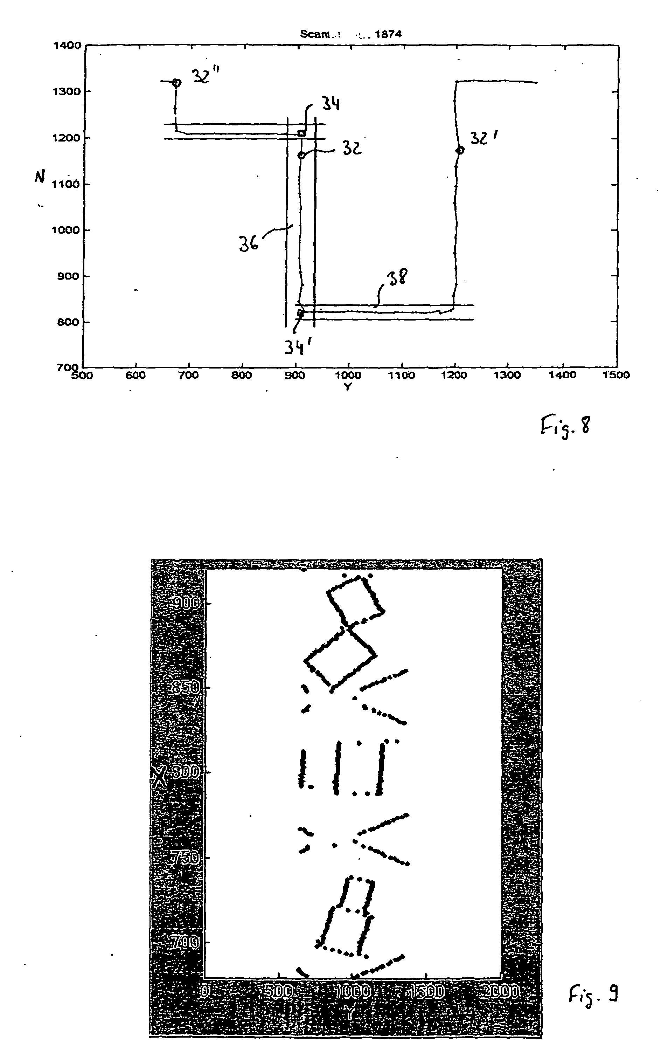

In einem folgenden Schritt S20 werden dann die Länge und genaue Lage der in dem vorhergehenden Schritt gefundenen Flanken bestimmt, indem die Lage von Endpunkten der Flanken bestimmt wird. Für jede gefundene Flanke wird dazu folgende Prozedur durchgeführt (vgl. Fig. 8):

Ausgehend von dem ermittelten, die vorläufige Lage der Flanke defmierenden Datenpunkt werden sowohl in Richtung kleinerer als auch größerer y-Werte aufeinanderfolgende Datenpunkte gesucht, deren y-Koordinate innerhalb eines in Fig. 8 durch vertikale Linien dargestellten Suchintervalls 36 vorgegebener Breite liegt, in dessen Mitte der Wert für die y-Koordinate des die Lage der Flanke definierenden Datenpunktes liegt, und die eine Höhendifferenz aufweisen, die das gleiche Vorzeichen aufweist wie die Höhendifferenz, die die Flanke definiert. Die Breite des Suchintervalls 36 richtet sich nach der räumlichen Auflösung der Laserscanner 14 und 16 sowie den erwarteten Dimensionen der Gegenstände 20, 20' und 20" und wird vorzugsweise durch Optimierungsversuche bestimmt.

Wird entweder kein Datenpunkt mehr im Suchintervall 36 gefunden oder tritt ein Datenpunkt mit einer Höhendifferenz mit einem Vorzeichen auf, das von dem Vorzeichen der Höhendifferenz, die die Flanke definiert, abweicht, wird die Suche in der entsprechenden Richtung abgebrochen.

Als y-Koordinate der Endpunkte der Flanke wird der Mittelwert der y-Koordinaten aller gefundenen Datenpunkte verwendet.

Ausgehend von den oben gefundenen Datenpunkten mit maximaler und minimaler z-Koordinate wird das Verfahren nun für angrenzende, im Wesentlichen horizontale, d.h in Richtung der Y-Achse verlaufende Bereiche in ähnlicher Form wiederholt, da die Flanken bei quaderförmigen Gegenständen in zu den Flanken orthogonale Flächen übergehen müssen.

Beginnend mit einem anfänglichen Datenpunkt aus der Menge der die Flanke bildenden Datenpunkte, dessen z-Koordinate einen Extremwert unter den z-Koordinaten der Datenpunkte in der Menge annimmt, werden in auf- wie auch absteigender Reihenfolge in der Gesamtabtastung aufeinanderfolgende Datenpunkte gesucht, deren z-Koordinate innerhalb eines in Fig. 8 durch waagerechte Linien angedeuteten Suchintervalls 38 vorgegebener Breite liegt, in dessen Mitte der ermittelte vorläufige Wert für die z-Koordinate liegt. Wie zuvor wird die Breite des Suchintervalls 38 in Abhängigkeit von dem räumlichen Auflösungsvermögen der Laserscanner 14 und 16 sowie den erwarteten Bereichen von Dimensionen der Gegenstände 20, 20' und 20" gewählt.

Wird in einer Richtung kein weiterer Datenpunkt gefunden, wird die Suche beendet.

Die Menge der gefundenen Datenpunkte entspricht dann einer zu der Flanke orthogonalen Fläche des Gegenstands.

Nach Beendigung der Suche wird als z-Koordinate des entsprechenden Endpunkts dann der Mittelwert der z-Koordinaten der aufgefundenen Datenpunkte verwendet.

Weiterhin wird als x-Koordinate der Endpunkte der Flanke die x-Koordinate des die vorläufige Lage der Flanke definierenden Datenpunkts verwendet.

Weiterhin wird einem Endpunkt einer Flanke eine Kantenrichtung zugeordnet, die im Beispiel als "linke" und "rechte" Kantenrichtung bezeichnet wird. Diese Kantenrichtung entspricht der Richtung, in der sich eine zu der Flanke orthogonale Fläche des Gegenstands in dem entsprechenden Endpunkt an die Flanke anschließt. Dazu wird überprüft, ob innerhalb des Suchintervalls für die z-Richtung mehr Datenpunkte gefunden werden, deren y-Koordinate jeweils einen kleineren Wert aufweist als die y-Koordinate des Endpunktes, oder mehr Datenpunkte, deren y-Koordinate eine größeren Wert aufweist. Im ersten Fall wird dem Endpunkt als Kantenrichtung "links", anderenfalls "rechts" zugeordnet.

Ergebnis der Flankenbestimmung sind also berechnete Endpunkte mit neu ermittelten x-, y- und z- Koordinaten und zugeordneten Kantenrichtungen. Diese Endpunkte sind in Fig. 8 durch die Kreise 34 und 34' dargestellt.

Die Endpunkte der Flanken in aufeinanderfolgenden Gesamtabtastungen müssen aufgrund des vorbekannten Formtyps, nämlich der Quaderform, der Gegenstände im Wesentlichen horizontal, d.h. in der X-Y-Ebene verlaufende Kanten oder im Einzelfall eine Ecke des Gegenstands wiedergeben.

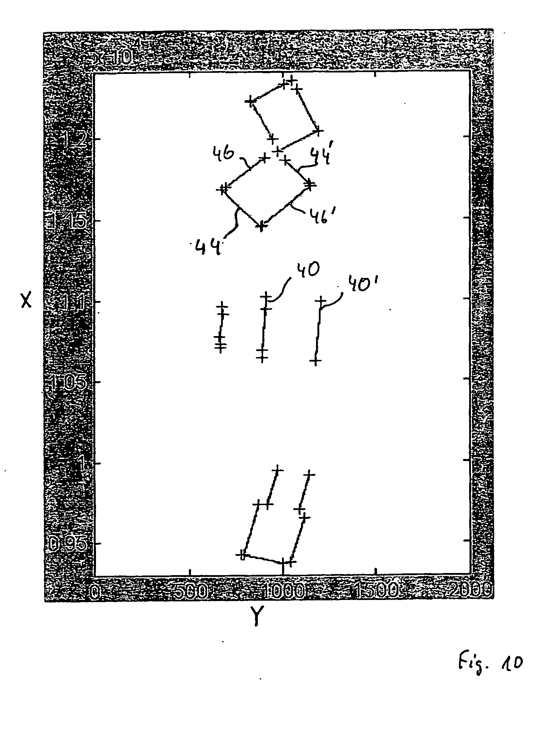

In einem folgenden Schritt S22 werden daher aus den Daten über die Flanken, d.h. deren Endpunkten und den diesen zugeordneten Kantenrichtungen, in der aktuellen Gesamtabtastung und einer vorgegebenen Anzahl vorhergehender Gesamtabtastungen zu der Ebene des Förderbandes 10 parallele Kanten ermittelt, die im Folgenden als horizontale Kanten bezeichnet werden. Diese horizontalen Kanten geben in einem gewissen Sinne einen Grundriss der erfassten Gegenstände wieder. In Fig. 9 sind Projektionen gefundener Endpunkte von Flanken auf die X-Y-Ebene dargestellt.

Dabei wird davon ausgegangen, dass bereits eine Menge von erkannten vorläufigen Kanten existiert, für die jeweils in entsprechenden Kantenpuffern die Endpunkte der sie konstituierenden Flanken einschließlich der ihnen zugeordneten Kantenrichtungen gespeichert sind.

Zu Beginn des Verfahrens ist die Menge von erkannten vorläufigen Kanten leer. In späteren Verfahrensstadien werden folgende Teilschritte für jede vorläufige Kante in der Menge der vorläufig erkannten Kanten durchgeführt:

Für eine ausgewählte vorläufige Kante werden unter den Endpunkten einer aktuellen Gesamtabtastung zugehörige Endpunkte gesucht.

Dazu wird für alle Endpunkte der aktuellen Gesamtabtastung überprüft, ob die z-Koordinate des jeweiligen Endpunktes um weniger als einen vorgegebenen maximalen kleinen Betrag von der z-Koordinate des Endpunktes in dem Kantenpuffer mit größter x-Koordinate abweicht und ob dem jeweiligen Endpunkt eine mit der Richtung der Endpunkte in dem Kantenpuffer übereinstimmende Richtung zugeordnet ist.

Nur für die Endpunkte, die diese beiden Kriterien erfüllen, wird überprüft, ob diese auch geometrisch der vorläufigen Kante entsprechen können.

Hierzu wird ausgenutzt, dass der Flächentyp der Standfläche der Gegenstände, nämlich ein Rechteck, und damit die Form der Kanten, nämlich Geradenabschnitte, bekannt sind.

Dazu wird in dem Kantenpuffer der Endpunkt gesucht, der den größten Wert der x-Koordinate aufweist, also der späteste Endpunkt ist. Bei entsprechender Anordnung der Endpunkte in dem Kantenpuffer ist dies der letzte Endpunkt.

Dann wird ein Fangbereich festgelegt, in dem nach Endpunkten aus der aktuellen Gesamtabtastung gesucht wird. Je nach Anzahl der Endpunkte in dem Kantenpuffer wird dieser Fangbereich unterschiedlich festgelegt:

Befinden sich weniger als fünf Punkte in dem Kantenpuffer, wird innerhalb eines Fangbereichs in y-Richtung, dessen Mitte auf dem Wert der y-Koordinate des Endpunkts mit der größten x-Koordinate liegt und der eine Breite von etwa dem Vierfachen des von dem Förderband 10 seit Auffinden des letzten Endpunkts der Kante zurückgelegten Weges umfasst, gesucht. Dieser Weg ist als Differenz der maximalen x-Koordinaten der aktuellen Endpunkte und der x-Koordinate in dem Kantenpuffer mit dem größten Wert der x-Koordinate ermittelbar. Dieser Fangbereich entspricht in der X-Y-Ebene etwa einem sich in X-Richtung öffnenden Dreieck.

Sind wenigstens fünf Punkte in dem Kantenpuffer enthalten, wird eine genäherte Steigung der Kante in der X-Y-Ebene ermittelt, indem eine Summe aller Differenzen der y-Koordinaten aufeinanderfolgender Endpunkte in dem Kantenpuffer durch die Summe aller Differenzen der x-Koordinaten aufeinanderfolgender Endpunkte in dem Kantenpuffer dividiert wird. Zu der y-Koordinate des Endpunkts mit der größten x-Koordinate wird das Produkt aus der genäherten Steigung und dem von dem Förderband 10 seit dem letzten Endpunkt der Kante zurückgelegten Weg addiert, um einen erwarteten Wert der y-Koordinate des nächsten zu suchenden Endpunktes zu erhalten. Dann wird wieder ein Fangbereich in y-Richtung definiert, dessen Mitte der erwartete Wert der y-Koordinate bildet und dessen Gesamtbreite das Doppelte des von dem Förderband 10 während einer Abtastperiode zurückgelegten Weges umfasst.

In diesen Fangbereichen in y-Richtung wird nun nach Endpunkten in der aktuellen Gesamtabtastung gesucht, die die ersten beiden Kriterien bereits erfüllt haben.

Wird ein solcher Endpunkt gefunden, wird der Endpunkt in den Kantenpuffer aufgenommen.

Andernfalls wird geprüft, seit wievielen Gesamtabtastungen kein neuer Endpunkt in den Kantenpuffer aufgenommen wurde, d.h. über welchen Abstand in X-Richtung kein Endpunkt mehr gefunden wurde. Wurden über eine vorgegeben Anzahl von Gesamtabtastungen, die einer vorgegebenen, in Abhängigkeit von dem Auflösungsvermögen der Laserscanners 14 und 16, der Fördergeschwindigkeit und einem zu erwartenden Bereich von Dimensionen der Gegenstände 20, 20' und 20" gewählten Strecke entspricht, keine Endpunkte mehr gefunden, wird angenommen, dass die Kante vollständig ist. Der Kantenpuffer wird dann abgeschlossen und bei der weiteren Kantensuche nicht mehr verwendet.

Enthält ein Kantenpuffer weniger als eine vorgegebene, in Abhängigkeit vom Auflösungsvermögen und dem erwarteten Bereich von Dimensionen der Gegenstände gewählte Anzahl von Endpunkten, im Beispiel fünf, werden die vorläufige Kante und der Kantenpuffer verworfen.

Daraufhin wird durch Überprüfung der mittleren quadratischen Abweichung der Endpunkte in dem Kantenpuffer von einer durch diese hindurch gelegte Regressionsgerade überprüft, ob die konstruierte Kante als Gerade anzusehen ist. Ist dies nicht der Fall, werden die Kante und der Kantenpuffer verworfen.

Andernfalls werden ein Anfangs- und ein Endpunkt der nun vollständigen Kante berechnet, indem der Endpunkt in dem Kantenpuffer mit dem kleinsten Wert der x-Koordinate auf die Regressionsgerade durch die Endpunkte in dem Kantenpuffer in einer Richtung orthogonal zu der Regressionsgerade projiziert wird. In gleicher Weise wird mit dem Endpunkt mit dem größten Wert der x-Koordinate in dem Kantenpuffer verfahren. Die projizierten Punkte werden als Endpunkte der Kante angesehen, der darüber hinaus noch der Mittelwert der z-Koordinaten der Endpunkte als z-Koordinate und die Richtung der Endpunkte als Richtung zugeordnet wird.

Das Verfahren wird dann mit der nächsten vorläufigen Kante fortgesetzt.

Nachdem alle vorläufigen Kanten durchlaufen wurden, werden die obigen Teilschritte nochmals analog durchgeführt, wobei jedoch die Rolle der X-Richtung und der Y-Richtung vertauscht sind.

Am Ende der Kantenbildung können Endpunkte der aktuellen Abtastung als nicht zugeordnet übrig bleiben. Es wird dann angenommen, dass diese Endpunkte jeweils zu einer neuen Kante gehören und es werden jeweils neue Kantenpuffer eröffnet.

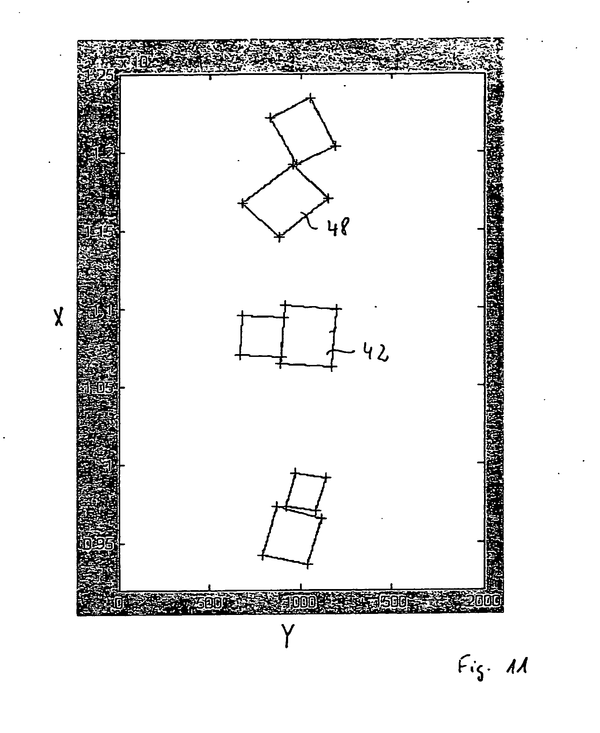

Das Ergebnis der Kantenbildung ausgehend von Fig. 9 ist in Fig. 10 gezeigt.

Im folgenden Schritt S24 wird die Objektauffindung auf der Basis der bisher als vollständig festgestellten horizontalen Kanten durchgeführt.

Dazu werden zunächst Winkel berechnet, die die gefundenen horizontalen Kanten mit der X-Achse einschließen.

Dann wird eine erste horizontale Kante aus der Menge der bestimmten horizontalen Kanten als aktuelle Kante gesetzt. Für die aktuelle Kante werden dann weitere Kanten in der zuvor bestimmten Menge der horizontalen Kanten gesucht, die zu der aktuellen horizontalen Kante parallel verlaufen, wozu der zuvor bestimmte Winkel mit der X-Achse verwendet wird. Parallelität wird erkannt, wenn sich die Winkel um weniger als einen vorgegebenen Maximalwert, im Beispiel von etwa 2°, unterscheiden.

Aus den Kanten, die dieses Kriterium erfüllen, werden dann die Kanten ausgewählt, deren z-Koordinate um weniger als eine vorgegebene maximale kleine z-Toleranz von der z-Koordinate der aktuellen horizontalen Kante abweicht und denen eine zu der Richtung der aktuellen horizontalen Kante entgegen gesetzte Richtung zugeordnet ist.

Sollten nach dieser Prüfung noch mehrere parallele Kanten übrig bleiben, wird als die der aktuellen Kante zugehörige Kante die Kante ausgewählt, die von der aktuellen Kante ausgehend in der Richtung liegt, die durch die der aktuellen Kante zugeordnete Richtung gegeben ist. Das bedeutet beispielsweise, dass einer aktuellen Kante mit Richtung "rechts" nur eine Kante mit Richtung "links" zugeordnet wird, deren Endpunkte in y-Richtung rechts der Endpunkte der aktuellen Kante liegen, d.h. größere y-Werte aufweisen. Erfüllen mehrere Kanten auch dieses Kriterium, wird die Kante mit dem geringsten Abstand gewählt.

Bei dem geschilderten Verfahren ist es möglich, dass in dem Kantenbildungsschritt Kanten mehrfach berechnet werden. Sollte bei der Suche nach einer Kante eine Kante mit einem Abstand unterhalb eines Abstandsgrenzwerts, der unter anderem durch die Minimalgröße der zu findenden Gegenstände gegeben ist und im Beispiel unter 2 mm beträgt, gefunden werden, wird diese Kante als redundant gelöscht und im weiteren Verfahren nicht mehr verwendet.

Die horizontale aktuelle Kante und die zugeordnete parallele horizontale Kante werden dann als einem Objekt zugehörig gekennzeichnet und aus der Menge der horizontalen Kanten ausgesondert.

In einem folgenden Teilschritt werden aus der Menge der bestimmten horizontalen Kanten zu der aktuellen horizontalen Kante orthogonale Kanten ermittelt. Dabei wird für jede der Kanten in der Menge geprüft, ob eine Abweichung zwischen deren Winkel mit der X-Achse und dem Winkel der aktuellen horizontalen Kante und der X-Achse modulo 180° innerhalb eines vorgegebenen Fehlerbereichs von im Beispiel etwa 3° liegt. Ist dies der Fall, wird die horizontale Kante als zu der aktuellen horizontalen Kante orthogonal angesehen.

Unter den orthogonalen Kanten werden dann die Kanten ausgewählt, deren z-Koordinate um weniger als einen vorgegebenen maximalen kleinen Betrag von der z-Koordinate der aktuellen horizontalen Kante abweicht.

Bleiben nach dieser Prüfung mehrere zu der aktuellen horizontalen Kante orthogonale Kante übrig, wird überprüft, ob diese die aktuelle horizontale Kante und die zugeordnete parallele horizontale Kante verbinden.

Dazu werden die jeweils nächsten Abstände der Endpunkte der orthogonalen horizontalen Kanten von den Endpunkten der aktuellen horizontalen Kante und den Endpunkten der parallelen horizontalen Kante berechnet. Sind diese kleiner als ein in Abhängigkeit von den Mindestdimensionen der Gegenstände vorgegebener Fehlerwert, hier etwa 50 mm, wird eine orthogonale horizontale Kante als dem Objekt zugehörig erkannt und aus der Menge der horizontalen Kanten ausgesondert.

Wurden keine orthogonalen horizontalen Kanten gefunden, was beispielsweise der Fall sein kann, wenn ein Gegenstand parallel zur X-Richtung ausgerichtet ist, werden die Endpunkte der aktuellen horizontalen Kante 40 und der parallelen horizontalen Kante 40' als Eckpunkte der Projektion des Objekts 42 in die X-Y-Ebene verwendet (vgl. Fig. 10 und 11).

Wurden orthogonale horizontale Kanten 44 und 44' zu parallelen horizontalen Kanten 46 und 46' gefunden, so werden als Eckpunkte der Projektion des Objekts 48 in die X-Y-Ebene die Schnittpunkte der aktuellen und der parallelen horizontalen Kanten bzw. deren Verlängerung mit denen der orthogonalen horizontalen Kanten bzw. deren Verlängerung verwendet.

Das Objekt wird nur als neues Objekt erkannt, wenn ein Vergleich mit schon erkannten Objekten ergeben hat, dass es nicht mit diesen übereinstimmt.

Aus der Lage der Eckpunkte der Projektion des Objekts in die X-Y-Ebene, d.h. dessen Grundriss, kann eine Grundfläche des Objekts berechnet werden.

Das Volumen des Objekts bzw. des durch dieses dargestellten Gegenstands ergibt sich dann durch Multiplikation der Grundfläche mit dem Abstand der horizontalen Kanten von dem Förderband 10.

Aus der verbleibenden Menge von horizontalen Kanten wird dann eine neue aktuelle horizontale Kante ausgewählt und die Objektfindung wiederholt. Das Ergebnis der Objektbildung ist in Fig. 11 gezeigt.

Nach Abschluss dieses Schrittes werden zum einen die Lagedaten und die berechneten Volumina der aufgefundenen Objekte über die entsprechende Schnittstelle der Auswerteeinrichtung 18 ausgegeben und zum anderen über die Eingabeschnittstellen neue Daten eingelesen, die während der Auswertung bei einer erneuten Abtastung erfasst wurden.

### Bezugszeichenliste

- 10: Förderband
- 12: Brücke
- 14: Laserscanner
- 16: Laserscanner
- 18: Auswerteeinrichtung
- 20, 20', 20": Gegenstände
- 22: Strahlungsbündel
- 24: Erfassungsbereich
- 26: Abtastebene
- 28: Bereich
- 30: Erfassungsbereich
- 32, 32', 32": definierende Datenpunkte
- 34, 34': Endpunkte
- 36: Suchintervall
- 38: Suchintervall
- 40, 40': Kanten
- 42: Objekt
- 44, 44': Kanten
- 46, 46': Kanten
- 48: Objekt

- r: Abstand
- ϕ: Winkel
- F: Förderrichtung

## Patentansprüche

1. Verfahren zum Auffinden von Gegenständen (20, 20', 20") mit einer Standfläche eines vorgegebenen Flächentyps, einer zu der Standfläche im Wesentlichen parallelen Deckfläche und einer oder mehreren zu der Standfläche im Wesentlichen orthogonal verlaufenden Seitenflächen, insbesondere von quaderförmigen Gegenständen (20, 20', 20"), auf einer Trägerebene (10) auf der Basis von Daten, die durch eine in einer zu der Trägerebene (10) parallelen Förderrichtung (F) verlaufende Relativbewegung zwischen einer Abtastebene (26), die einen vorgegebenen Winkel mit der Trägerebene (10) einschließt, und den Gegenständen (20, 20', 20") und durch wiederholte Durchführung einer Gesamtabtastung der Lage von Punkten (28) auf den Gegenständen (20, 20', 20") innerhalb eines Erfassungsbereichs (24, 30) in der Abtastebene (26) erhalten wurden und die Informationen über die Lage der erfassten Gegenstandspunkte (28) in der Abtastebene (26) enthalten, sowie auf der Basis von Informationen, aus denen die Relativlage von Abtastebene (26) und Gegenständen (20, 20', 20") in Förderrichtung (F) während einer Gesamtabtastung ableitbar ist, bei dem wiederholt die Schritte ausgeführt werden: Einlesen der Daten über die Lage der Gegenstandspunkte (28) auf den Gegenständen (20, 20', 20") in der Abtastebene (26) und Erfassung von Informationen über die Relativlage von Abtastebene (26) und Gegenständen (20, 20', 20") in Förderrichtung (F) für eine aktuelle Gesamtabtastung,
Ermittlung von Lagen und Ausdehnungen von Flanken der Gegenstände, die mit der Trägerebene (10) im Wesentlichen einen rechten Winkel bilden, aus den Daten der aktuellen Gesamtabtastung, Ermittlung von Lagen und Längen von zu der Trägerebene (10) im Wesentlichen parallelen Kanten (40, 40', 44, 44', 46, 46') der Gegenstände (20, 20', 20") auf der Basis der Lagen und Ausdehnungen der Flanken sowie der Informationen über die Relativlage von Abtastebene (26) und Gegenständen (20, 20', 20") in Förderrichtung (F) in der aktuellen Gesamtabtastung und vorhergehenden Gesamtabtastungen, und
Bestimmung von Gegenständen (20, 20', 20") entsprechenden Objekten (42, 48) aus den Lagen und Längen der zu der Trägerebene (10) parallelen Kanten (40, 40', 44, 44', 46, 46').

2. Verfahren nach Anspruch 1,
**dadurch gekennzeichnet,**
**dass** Daten verwendet werden, die unter Verwendung einer zu der Trägerebene (10) orthogonalen Abtastebene (26) erhalten wurden.

3. Verfahren nach Anspruch 1 oder 2,
**dadurch gekennzeichnet,**
**dass** vor der Bestimmung der Flanken die Daten in Bezug auf eine Richtung orthogonal zu der Trägerebene einer räumlichen Filterung unterzogen werden.

4. Verfahren nach einem der vorhergehenden Ansprüche,
**dadurch gekennzeichnet,**
**dass** zur Erkennung der Flanken jeweils Beträge von Abständen von aufeinanderfolgenden Datenpunkten in einer Richtung orthogonal zu der Trägerebene (10) verwendet werden.

5. Verfahren nach einem der vorhergehenden Ansprüche,
**dadurch gekennzeichnet,**
**dass** Lagen von Endpunkten (34, 34') der Flanken jeweils in einer Richtung parallel zu einer Schnittgeraden von Trägerebene (10) und Abtastebene (26) durch Mittelung entsprechender Daten von der Flanke zugeordneten Datenpunkten erhalten werden.

6. Verfahren nach einem der vorhergehenden Ansprüche,
**dadurch gekennzeichnet,**
**dass** einem Endpunkt (34, 34') einer Flanke ein Abstand von der Trägerebene (10) oder ein Wert einer Koordinate in einer Richtung orthogonal zu der Trägerebene (10) zugeordnet wird, der durch Mittelung entsprechender Daten von Datenpunkten einer sich an die Flanke an dem Endpunkt (34, 34') anschließenden, zu der Flanke im Wesentlichen orthogonale Fläche eines erfassten Gegenstands (20, 20', 20") erhalten werden.

7. Verfahren nach einem der vorhergehenden Ansprüche,
**dadurch gekennzeichnet,**
**dass** einem Endpunkt (34, 34') einer Flanke eine Richtung zugeordnet wird, die angibt, in welcher Richtung sich eine sich an die Flanke anschließende, zu dieser im Wesentlichen orthogonale Fläche eines erfassten Gegenstands (20, 20', 20") erstreckt.

8. Verfahren nach einem der vorhergehenden Ansprüche,
**dadurch gekennzeichnet,**
**dass** die Lage von Endpunkten (34, 34') der Flanken einer Gesamtabtastung in der Förderrichtung (F) der Gegenstände auf der Basis der Bewegungsgeschwindigkeit zwischen der Abtastebene (26) und den Gegenständen (20, 20', 20") und dem zeitlichen Abstand der Gesamtabtastung von der aktuellen Gesamtabtastung bestimmt wird.

9. Verfahren nach einem der vorhergehenden Ansprüche,
**dadurch gekennzeichnet,**
**dass** bei der Bestimmung der zu der Trägerebene (10) parallelen Kanten (40, 40', 44, 44', 46, 46') die Lagen von Endpunkten (34, 34') der Flanken und die den Endpunkten (34, 34') zugeordneten Richtungen verwendet werden.

10. Verfahren nach einem der vorhergehenden Ansprüche,
**dadurch gekennzeichnet,**
**dass** es zur Auffindung von quaderförmigen Gegenständen (20, 20', 20") verwendet wird, und
**dass** ein neues Objekt (42, 48) nur dann erzeugt wird, wenn zwei zu der Trägerebene (10) im Wesentlichen parallele Kanten (40, 40', 44, 44', 46, 46') aufgefunden werden, die in etwa den gleichen Abstand von der Trägerebene (10) aufweisen und einen Winkel einschließen, dessen Betrag kleiner als ein vorgegebener Grenzwinkel ist.

11. Verfahren nach Anspruch 10,
**dadurch gekennzeichnet,**
**dass** es zur Auffindung von quaderförmigen Gegenständen (20, 20', 20") verwendet wird, und
**dass** ein neues Objekt (42, 48) nur dann erzeugt wird, wenn den Endpunkten (34, 34'), die der einen zu der Trägerebene (10) parallelen Kante zugrunde liegen, eine andere Richtung zugeordnet ist, als den Endpunkten (34, 34'), die der anderen zu der Trägerebene (10) parallelen Kante zugrunde liegen.

12. Verfahren nach einem der vorhergehenden Ansprüche,
**dadurch gekennzeichnet,**
**dass** das Volumen wenigstens eines Objekts (42, 48) auf der Basis einer Grundfläche, die durch zu der Trägerebene (10) parallele Kanten (40, 40', 44, 44', 46, 46') des Objekts (42, 48) gegeben ist, und des Abstandes der zu der Trägerebene (10) parallelen Kanten (40, 40', 44, 44', 46, 46') von der Trägerebene (10) berechnet wird.

13. Verfahren zur Erfassung von Gegenständen (20, 20', 20") mit einer Standfläche eines vorgegebenen Flächentyps, einer zu der Standfläche im Wesentlichen parallelen Deckfläche und einer oder mehreren zu der Standfläche im Wesentlichen orthogonal verlaufenden Seitenflächen, insbesondere von quaderförmigen Gegenständen (20, 20', 20"), auf einer Trägerebene (10), bei dem
eine Abtastebene (26), die im Wesentlichen einen vorgegebenen Winkel mit der Trägerebene (10) einschließt, und die Gegenstände in einer zu der Trägerebene (10) parallelen Förderrichtung (F) relativ zueinander bewegt werden,
dabei wiederholt eine Gesamtabtastung eines Erfassungsbereichs (24, 30) in der Abtastebene (26) durchgeführt wird, bei der Daten über die Lage von Gegenstandspunkten (28) auf den Gegenständen (20, 20', 20") in der Abtastebene (26) sowie Informationen, aus denen die Relativlage von Abtastebene (26) und Gegenständen (20, 20', 20") in Förderrichtung (F) während einer Gesamtabtastung ableitbar ist, erfasst werden, und
das Verfahren nach einem der Ansprüche 1 bis 12 auf der Basis der gewonnenen Daten durchgeführt wird.

14. Verfahren nach Anspruch 13,
**dadurch gekennzeichnet,**
**dass** die Abtastebene (26) im Wesentlichen orthogonal zu der Trägerebene (10) ausgerichtet ist.

15. Verfahren nach Anspruch 13 oder 14,
**dadurch gekennzeichnet,**
**dass** die Daten über die Lage von Gegenstandspunkten (28) mittels einer Lasermesseinrichtung (14, 16) erfasst werden, die einen flächigen Erfassungsbereich (24, 30) aufweist.

16. Verfahren nach einem der Ansprüche 13 bis 15,
dass eine Lasermesseinrichtung (14, 16) verwendet wird, die wenigstens einen Laserscanner, vorzugsweise einen Radialscanner (14, 16), umfasst.

17. Verfahren nach einem der Ansprüche 13 bis 16,
**dadurch gekennzeichnet,**
**dass** wenigstens zwei, in Förderrichtung (F) der Gegenstände und oberhalb der Trägerebene (10) angeordnete Laserscanner, insbesondere Radialscanner (14, 16), verwendet werden, deren Erfassungsbereiche (24, 30) sich überlappen.

18. Verfahren nach einem der Ansprüche 13 bis 17,
**dadurch gekennzeichnet,**
**dass** bei ortsfest angeordneter Abtastebene (26) die Gegenstände (20, 20', 20") bewegt werden.

19. Vorrichtung zur Erfassung von Gegenständen mit einer Standfläche eines vorgegebenen Flächentyps, einer zu der Standfläche im Wesentlichen parallelen Deckfläche und einer oder mehreren zu der Standfläche im Wesentlichen orthogonal verlaufenden Seitenflächen, insbesondere von quaderförmigen Gegenständen (20, 20', 20"), auf einer Trägerebene (10) mit mindestens einem Sensor (14, 16) für elektromagnetische Strahlung, mit dem bei wiederholten Gesamtabtastungen Daten in Bezug auf die Lage von Punkten auf den Gegenständen (20, 20', 20") in einem Erfassungsbereich (24, 30) in einer Abtastebene (26) des Sensors (14, 16) erfassbar sind,
einer Einrichtung (10), mit der die Gegenstände (20, 20', 20") und der Sensor (14, 16) in einer zu der Trägerebene (10) parallelen Förderrichtung (F) relativ zueinander bewegbar sind,
wobei die Abtastebene (26) des Sensors (14, 16) einen vorgegebenen Winkel mit der Trägerebene (10) einschließt ist, und
mit einer Datenverarbeitungseinrichtung (18), die zur Durchführung des Verfahrens nach einem der Ansprüche 1 bis 12 ausgebildet ist.

20. Vorrichtung nach Anspruch 19,
**dadurch gekennzeichnet,**
**dass** die Abtastebene (26) im Wesentlichen orthogonal zu der Trägerebene (10) ausgerichtet ist.

21. Vorrichtung nach Anspruch 19 oder 20,
**dadurch gekennzeichnet,**
**dass** der Sensor (14, 16) ein Laserscanner, insbesondere ein Radialscanner, ist.

22. Vorrichtung nach Anspruch 21,
**dadurch gekennzeichnet,**
**dass** zwei Laserscanner (14, 16) vorgesehen sind, deren Abtastebenen (26) in einem vorgegebenen Winkel zu der Trägerebene (10) geneigt sind und in einem vorgegebenen Abstand von dieser entfernt und zu beiden Seiten einer möglichen Bewegungsbahn der Gegenstände (20, 20', 20") angeordnet sind.

23. Vorrichtung nach einem der Ansprüche 19 bis 22,
**dadurch gekennzeichnet,**
**dass** die Einrichtung (10) zur Relativbewegung eine Fördereinrichtung (10) für die Gegenstände (20, 20', 20") ist.

24. Computerprogramm mit Programmcode-Mitteln, um die Verfahren nach einem der Ansprüche 1 bis 12 durchzuführen, wenn das Programm auf einem Computer ausgeführt wird.

25. Computerprogrammprodukt mit Programmcode-Mitteln, die auf einem computerlesbaren Datenträger gespeichert sind, um das Verfahren nach einem der Ansprüche 1 bis 12 durchzuführen, wenn das Computerprogrammprodukt auf einem Computer ausgeführt wird.

## Claims

1. A method of locating articles (20, 20', 20") with a base surface of a pre-determined type of surface shape, a top surface substantially parallel to the base surface and one more side surfaces extending substantially orthogonally to the base surface, in particular articles of right parallelepiped shape (20, 20', 20"), on a support plane (10) on the basis of data obtained by a relative movement extending in a transport direction (F) parallel to the support plane (10) between a scanning plane (26), which includes a pre-determined angle with the support plane (10), and the articles (20, 20', 20") and by repeated carrying out of a total scan of the location of points (28) on the articles (20, 20', 20") within a detection region (24, 30) in the scanning plane (26), and including information on the location of the article points (28) detected in the scanning plane (26) and on the basis of information from which the relative position of the scanning plane (26) and articles (20, 20', 20") in the transport direction (F) can be derived during a total scan, the method comprising the repeated performing of the steps of:
reading of the data on the location of the article points (28) on the articles (20, 20',20") in the scanning plane (26) and detection of information on the relative position of the scanning plane (26) and articles (20, 20', 20") in the transport direction (F) for a current total scan;
determination of positions and extents of flanks of the articles, which substantially form a right angle with the support plane (10), from the data of the current total scan;
determination of positions and lengths of edges (40, 40', 44, 44', 46, 46') of the articles (20, 20', 20") substantially parallel to the support plane (10) on the basis of the positions and extents of the flanks as well as of the information on the relative position of the scanning plane (26) and the articles (20, 20', 20") in the transport direction (F) in the current total scan and in preceding total scans; and
defining of objects (42, 48) corresponding to articles (20, 20', 20") from the positions and lengths of the edges (40, 40', 44, 44', 46, 46') parallel to the support plane (10).

2. A method in accordance with claim 1, **characterized in that** data are used which were obtained while using a scanning plane (26) orthogonal to the support plane (10).

3. A method in accordance with claim 1 or claim 2, **characterized in that** the data are subjected to a spatial filtering with respect to a direction orthogonal to the support plane before the determining of the flanks.

4. A method in accordance with any one of the preceding claims, **characterized in that**, for the recognition of the flanks, magnitudes of distances of successive data points in a direction orthogonal to the support plane (10) are used in each case.

5. A method in accordance with any one of the preceding claims, **characterized in that** positions of end points (34, 34') of the flanks in a direction parallel to an intersection line of the support plane (10) and the scanning plane (26) are obtained in each case by averaging corresponding data of data points associated with the flank.

6. A method in accordance with any one of the preceding claims, **characterized in that** a distance from the support plane (10), or a value of a coordinate in a direction orthogonal to the support plane (10), is associated with an end point (34, 34') of a flank and is obtained by averaging of corresponding data from data points of a surface of a detected article (20, 20', 20") adjoining the flank at the end point (34, 34') and substantially orthogonal to the flank.

7. A method in accordance with any one of the preceding claims, **characterized in that** a direction is associated with an end point (34, 34') of a flank which specifies in which direction a surface of a detected article (20, 20', 20") extends which adjoins the flank and is substantially orthogonal to it.

8. A method in accordance with any one of the preceding claims, **characterized in that** the position of end points (34, 34') of the flanks of a total scan in the transport direction (F) of the articles is determined on the basis of the movement speed between the scanning plane (26) and the articles (20, 20', 20") and the time interval of the total scan from the current total scan.

9. A method in accordance with any one of the preceding claims, **characterized in that** the positions of end points (34, 34') of the flanks and the directions associated with the end points (34, 34') are used in the determining of the edges (40, 40', 44, 44', 46, 46') parallel to the support plane (10).

10. A method in accordance with any one of the preceding claims, **characterized in that** it is used to locate articles (20, 20', 20") of right parallelepiped shape; and
**in that** a new object (42, 48) is only generated when two edges (40, 40', 44, 44', 46, 46') substantially parallel to the support plane (10) are located which have approximately the same distance from the support plane (10) and include an angle whose magnitude is smaller than a pre-determined limiting angle.

11. A method in accordance with claim 10, **characterized in that** it is used to locate articles (20, 20', 20") of right parallelepiped shape; and
**in that** a new object (42, 48) is only generated when a different direction is associated with the end points (34, 34'), which underlie the edge parallel to the support plane (10) than with the end points (34, 34') which underlie the other edge parallel to the support plane (10).

12. A method in accordance with any one of the preceding claims, **characterized in that** the volume of at least one object (42, 48) is calculated on the basis of a base surface which is specified by edges (40, 40', 44, 44', 46, 46') of the object (42, 48) parallel to the support plane (10) and of the distance from the support plane (10) of the edges (40, 40', 44, 44', 46, 46') parallel to the support plane (10).

13. A method of detecting articles (20, 20', 20") with a base surface of a pre-determined type of surface shape, a top surface substantially parallel to the base surface and one or more side surfaces extending substantially orthogonally to the base surface, in particular of articles (20, 20', 20") of right parallelepiped shape, on a support plane (10), wherein
a scanning plane (26), which substantially includes a pre-determined angle with the support plane (10), and the articles are moved relative to one another in a transport direction (F) parallel to the support plane (10),
a total scan of a detection region (24, 30) in the scanning plane (26) is carried out repeatedly, in which data are detected on the location of article points (28) on the articles (20, 20', 20") in the scanning plane (26) as well as information from which the relative position of the scanning plane (26) and articles (20, 20', 20") in the transport direction (F) can be derived during a total scan; and
the method in accordance with any one of the preceding claims 1 to 12 is carried out on the basis of the data gained.

14. A method in accordance with claim 13, **characterized in that** the scanning plane (26) is substantially aligned orthogonally to the support plane (10).

15. A method in accordance with claim 13 or claim 14, **characterized in that** the data on the location of points (28) on the articles are detected by means of a laser measuring device (14, 16) which has an areal detection region (24, 30).

16. A method in accordance with any one of the preceding claims 13 to 15, **characterized in that** a laser measuring device (14, 16) is used which includes at least one laser scanner, preferably a radial scanner (14, 16).

17. A method in accordance with any one of the preceding claims 13 to 16, **characterized in that** at least two laser scanners, in particular radial scanners (14, 16), arranged in the transport direction (F) of the articles and above the support plane (10) are used whose detection regions (24, 30) overlap.

18. A method in accordance with any one of the preceding claims 13 to 17, **characterized in that** the articles (20, 20', 20") are moved when the scanning plane (26) is arranged to be stationary.

19. An apparatus for the detection of articles with a base surface of a pre-determined type of surface shape, a top surface substantially parallel to the base surface and one or more side surfaces extending substantially orthogonally to the base surface, in particular of articles (20, 20', 20") of a right parallelepiped shape, on a support plane (10), comprising at least one sensor (14, 16) for electromagnetic radiation with which data can be detected with repeated total scans with respect to the location of points on the articles (20, 20'. 20") in a detection region (24, 30) in a scanning plane (26) of the sensor (14, 16);
a device (10) with which the articles (20, 20', 20") and the sensor (14, 16) can be moved relative to one another in a transport direction (F) parallel to the support plane (10);
wherein the scanning plane (26) of the sensor (14, 16) includes a pre-determined angle with the support plane (10); and
comprising a data processing device (18) which is adapted for the carrying out of the method in accordance with any one of the preceding claims 1 to 12.

20. An apparatus in accordance with claim 19 or claim 21, **characterized in that** the scanning plane (26) is aligned substantially orthogonally to the support plane (10).

21. An apparatus in accordance with claim 19, **characterized in that** the sensor (14, 16) is a laser scanner, in particular a radial scanner.

22. An apparatus in accordance with claim 21, **characterized in that** two laser scanners (14, 16) are provided whose scanning planes (26) are inclined at a pre-determined angle to the support plane (10) and are arranged at a pre-determined distance from this and at both sides of a possible trajectory of the articles (20, 20', 20").

23. An apparatus in accordance with any one of the preceding claims 19 to 22, **characterized in that** the device (10) for the relative movement is a conveyor device (10) for the articles (20, 20', 20").

24. A computer program comprising program code means in order to carry out the methods in accordance with any one of the preceding claims 1 to 12 when the program is run on a computer.

25. A computer program product comprising program code means which are stored in a data carrier which can be read by a computer to carry out the method in accordance with any one of the preceding claims 1 to 12 when the computer program product is run on a computer

## Revendications

1. Procédé destiné à l'identification d'objets (20, 20', 20") avec une surface d'assise d'un type de surface prédéterminé, une surface de recouvrement sensiblement parallèle à la surface d'assise, et une ou plusieurs surfaces latérales s'étendant pour l'essentiel orthogonalement à la surface d'assise, notamment d'objets (20, 20', 20") parallélépipédiques, et ce sur un plan de support (10) sur la base de données ayant été obtenues par un mouvement relatif dans un sens de transport (F) parallèle au plan de support (10) entre un plan de balayage (26), qui forme un angle prédéterminé avec le plan de support (10), et les objets (20, 20', 20"), et par l'exécution réitérée d'un balayage d'ensemble de la position de points (28) sur les objets (20, 20', 20") à l'intérieur d'une zone de saisie (24, 30) du plan de balayage (26), et contenant les informations relatives à la position des points d'objet (28) détectés dans le plan de balayage (26), ainsi que sur la base d'informations desquelles peut être déduite la position relative du plan de balayage (26) et des objets (20, 20', 20") dans le sens de transport (F) pendant un balayage d'ensemble, dans lequel les phases suivantes sont effectuées de façon réitérée :
Lecture des données relatives à la position des points d'objets (28) sur les objets (20, 20', 20") dans le plan de balayage (26), et saisie d'informations sur la position relative du plan de balayage (26) et des objets (20, 20', 20") dans le sens de transport (F) pour un balayage d'ensemble actuel,
Détermination à partir des données du balayage d'ensemble actuel de positions et d'extensions de flancs des objets, qui forment pour l'essentiel un angle droit avec le plan de support (10),
Détermination de positions et de longueurs de bords (40, 40', 44, 44', 46, 46') des objets (20, 20', 20") sensiblement parallèles au plan de support (10) sur la base des positions et des extensions des flancs, ainsi que sur la base des informations sur la position relative du plan de balayage (26) et des objets (20, 20', 20") dans le sens de transport (F) pendant le balayage d'ensemble actuel et des balayages d'ensemble précédents, et
Détermination de produits (42, 48) correspondant aux objets (20, 20', 20") à partir des positions et des longueurs des bords (40, 40', 44, 44', 46, 46') parallèles au plan de support (10).

2. Procédé selon la revendication 1,
**caractérisé en ce que**,
des données sont utilisées, qui ont été obtenues par l'utilisation d'un plan de balayage (26) orthogonal au plan de support (10).

3. Procédé selon la revendication 1 ou 2,
**caractérisé en ce que**,
avant l'identification des flancs, les données sont soumises à un filtrage spatial par rapport à une direction orthogonale au plan de support.

4. Procédé selon l'une des revendications précédentes,
**caractérisé en ce que**
des valeurs d'écartements de points de données successifs dans une direction orthogonale au plan de support (10) sont respectivement utilisées pour l'identification des flancs.

5. Procédé selon l'une des revendications précédentes,
**caractérisé en ce que**
des positions de points d'extrémité (34, 34') des flancs dans une direction parallèle à une droite de coupe du plan de support (10) et du plan de balayage (26) sont obtenues par l'établissement de la moyenne de données correspondantes de points de données associées aux flancs.

6. Procédé selon l'une des revendications précédentes,
**caractérisé en ce que**,
à un point d'extrémité (34, 34') d'un flanc est associée une distance par rapport au plan de support (10) ou une valeur d'une coordonnée dans une direction orthogonale au plan de support (10), qui sont obtenues par l'établissement de la moyenne de données correspondantes de points de données d'une surface sensiblement orthogonale au flanc, se raccordant au flanc au niveau du point d'extrémité (34, 34'), d'un objet (20, 20', 20") détecté.

7. Procédé selon l'une des revendications précédentes,
**caractérisé en ce que**
une direction est associée à un point d'extrémité (34, 34') d'un flanc, qui indique dans quelle direction s'étend une surface sensiblement orthogonale à ce flanc, se raccordant à celui-ci, d'un objet (20, 20', 20") détecté.

8. Procédé selon l'une des revendications précédentes,
**caractérisé en ce que**
la position de points d'extrémité (34, 34') des flancs d'un balayage d'ensemble dans le sens de transport (F) des objets est déterminée sur la base de la vitesse de déplacement entre le plan de balayage (26) et les objets (20, 20', 20"), et de l'intervalle de temps entre le balayage d'ensemble et le balayage d'ensemble actuel.

9. Procédé selon l'une des revendications précédentes,
**caractérisé en ce que**
les positions de points d'extrémité (34, 34') des flancs et les directions associées aux points d'extrémité (34, 34') sont utilisées lors de la détermination des bords (40, 40', 44, 44', 46, 46') parallèles au plan de support (10).

10. Procédé selon l'une des revendications précédentes,
**caractérisé en ce que**
il est utilisé pour l'identification d'objets (20, 20', 20") parallélépipédiques, et
**en ce qu'**un nouveau produit (42, 48) n'est engendré que lorsque deux bords (40, 40', 44, 44', 46, 46') sensiblement parallèles au plan de support (10) sont identifiés, qui sont approximativement situés au même écartement du plan de support (10), et qui forment un angle dont la valeur est inférieure à un angle limite prédéterminé.

11. Procédé selon la revendication 10,
**caractérisé en ce que**
il est utilisé pour l'identification d'objets (20, 20', 20") parallélépipédiques, et
**en ce qu'**un nouveau produit (42, 48) n'est engendré que lorsque, aux points d'extrémité (34, 34') qui sont à la base d'un flanc parallèle au plan de support (10), il est associé une direction autre qu'aux points d'extrémité (34, 34') qui sont à la base de l'autre flanc parallèle au plan de support (10).

12. Procédé selon l'une des revendications précédentes,
**caractérisé en ce que**
le volume d'au moins un produit (42, 48) est calculé sur la base d'une surface de base qui est définie par des bords (40, 40', 44, 44', 46, 46') parallèles au plan de support (10) du produit (42, 48), et par l'écartement par rapport au plan de support (10) des bords (40, 40', 44, 44', 46, 46') parallèles au plan de support (10).

13. Procédé destiné à la détection d'objets (20, 20', 20") avec une surface d'assise d'un type de surface prédéterminé, une surface de recouvrement sensiblement parallèle à la surface d'assise, et une ou plusieurs surfaces latérales s'étendant pour l'essentiel orthogonalement à la surface d'assise, notamment d'objets (20, 20', 20") parallélépipédiques, sur un plan de support (10), dans lequel
un plan de balayage (26), qui forme pour l'essentiel un angle prédéterminé avec le plan de support (10), et les objets, sont déplacés les uns par rapport aux autres dans un sens de transport (F) parallèle au plan de support (10),
un balayage d'ensemble d'une zone de saisie (24, 30) est effectué de façon réitérée dans le plan de balayage (26), lors duquel sont saisies des données relatives à la position de points d'objets (28) sur les objets (20, 20', 20") dans le plan de balayage (26), ainsi que des informations desquelles peut être déduite la position relative du plan de balayage (26) et des objets (20, 20', 20") dans le sens de transport (F) pendant un balayage d'ensemble, et
d'après lequel le procédé selon l'une des revendications 1 à 12 est mis en oeuvre sur la base des données obtenues.

14. Procédé selon la revendication 13,
**caractérisé en ce que**
le plan de balayage (26) est pour l'essentiel orienté orthogonalement au plan de support (10).

15. Procédé selon la revendication 13 ou 14,
**caractérisé en ce que**
les données relatives à la position de points d'objets (28) sont saisies au moyen d'un dispositif de mesure laser (14, 16) comportant une zone de saisie (24, 30) plane.

16. Procédé selon l'une des revendications 13 à 15,
**caractérisé en ce que**
il est utilisé un dispositif de mesure laser (14, 16) comportant au moins un scanneur laser, de préférence un scanneur radial (14, 16).

17. Procédé selon l'une des revendications 13 à 16,
**caractérisé en ce que**
il est utilisé au moins deux scanneurs laser, notamment des scanneurs radiaux (14, 16), qui sont disposés dans le sens de transport (F) des objets et au-dessus du plan de support (10), et dont les zones de saisie (24, 30) se chevauchent.

18. Procédé selon l'une des revendications 13 à 17,
**caractérisé en ce que**,
lorsque le plan de balayage (26) est disposé de façon stationnaire, les objets (20, 20', 20") sont déplacés.

19. Dispositif destiné à la détection d'objets avec une surface d'assise d'un type de surface prédéterminé, une surface de recouvrement sensiblement parallèle à la surface d'assise, et une ou plusieurs surfaces latérales s'étendant pour l'essentiel orthogonalement à la surface d'assise, notamment d'objets (20, 20', 20") parallélépipédiques, sur un plan de support (10), comportant au moins un détecteur (14, 16) à rayonnement électromagnétique, avec lequel des données relatives à la position de points sur les objets (20, 20', 20") peuvent être saisies lors de balayages d'ensemble réitérés dans une zone de saisie (24, 30) d'un plan de balayage (26) du détecteur (14, 16),
un dispositif (10), avec lequel les objets (20, 20', 20") et le détecteur (14, 16) peuvent être déplacés les uns par rapport aux autres dans un sens de transport (F) parallèle au plan de support (10),
le plan de balayage (26) du détecteur (14, 16) formant un angle prédéterminé avec le plan de support (10), et
un dispositif de traitement de données (18), qui est agencé pour la mise en oeuvre du procédé selon l'une des revendications 1 à 12.

20. Dispositif selon la revendication 19,
**caractérisé en ce que**
le plan de balayage (26) est pour l'essentiel orienté orthogonalement au plan de support (10).

21. Dispositif selon la revendication 19 ou 20,
**caractérisé en ce que**
le détecteur (14, 16) est un scanneur laser, notamment un scanneur radial.

22. Dispositif selon la revendication 21,
**caractérisé en ce que**,
il est prévu deux scanneurs laser (14, 16), dont les plans de balayage (26) sont inclinés suivant un angle prédéterminé par rapport au plan de support (10), et qui sont disposés à un écartement prédéterminé de celui-ci et des deux côtés d'une voie de déplacement possible des objets (20, 20', 20").

23. Dispositif selon l'une des revendications 19 à 22,
**caractérisé en ce que**
le dispositif (10) pour le déplacement relatif est un dispositif de transport (10) pour les objets (20, 20', 20").

24. Programme d'ordinateur comportant des moyens de code programme pour la mise en oeuvre des procédés selon l'une des revendications 1 à 12 lorsque le programme est exécuté sur un ordinateur.

25. Produit de programme d'ordinateur comportant des moyens de code programme, qui sont mémorisés sur un support de données pouvant être lu par ordinateur, pour la mise en oeuvre du procédé selon l'une des revendications 1 à 12 lorsque le produit de programme d'ordinateur est exécuté sur un ordinateur.
